# FASCICULE DE BREVET EUROPEEN

(11) **EP 1 611 709 B1**
(45) Date de publication et mention de la délivrance du brevet: **01.08.2007**
(21) Numéro de dépôt: 04723233.5
(22) Date de dépôt: 25.03.2004
(51) Int. Cl.: H04L 9/18

(54) **PROCEDE ET SYSTEME DE CRYPTAGE**
VERSCHLÜSSELUNGSVERFAHREN UND -SYSTEM
ENCRYPTION METHOD AND SYSTEM

(30) Priorité: 28.03.2003 FR 0303844
(43) Date de publication de la demande: 04.01.2006
(73) Titulaire: Everbee Networks, 75002 Paris (FR)
(72) Inventeur: STEHLE, Jean-Luc, F-75015 Paris (FR)
(74) Mandataire: Grynwald, Albert
(86) Numéro de dépôt international: PCT/FR2004/050127
(87) Numéro de publication internationale: WO 2004/088916

(56) Documents cités:
- EP-A- 1 063 811
- WO-A-02/41566
- DE-B- 1 206 011
- DE-C- 2 553 897
- US-A- 6 128 386

## Description

La sécurisation des communications par voie électronique prend une importance croissante avec le développement du réseau Internet et de ses applications. Les besoins en sécurité dépassent largement le cadre des communications professionnelles entre les entreprises et leurs clients. Plus généralement ce sont toutes les communications par courrier électronique, y compris les communications grand public, qui devraient être protégées contre la lecture, et, plus grave, contre une éventuelle modification, par un acteur non autorisé.

De nombreuses techniques de cryptage sont disponibles et permettent d'obtenir un texte crypté de même longueur que le clair et dans lequel tous les 256 octets possibles sont équiprobables, ce qui couramment considéré par les cryptologues comme une condition nécessaire. Elles peuvent être classées en deux grandes familles, les algorithmes par blocs et les algorithmes par masque.

Les algorithmes par blocs découpent le texte en blocs de longueur fixe, le cryptage ou le décryptage se faisant bloc par bloc et donnant comme résultat un bloc de même longueur que le bloc qui avait été fourni. Il en est ainsi du cryptage par le système DES - Data Encryption Standard -, utilisant des blocs de 8 octets, admis comme standard aux USA en 1976, et devenu depuis standard de fait mondial, ou de l'AES - Advanced Encryption Standard -, utilisant des blocs de 16 octets sélectionné en 2000 comme futur nouveau standard par les organismes officiels américains.

Les algorithmes par masque consistent à générer un masque de même longueur que le texte à crypter, et à appliquer un XOR entre le texte et le masque. Le décryptage se fait en appliquant une seconde fois un XOR avec le même masque. Ici et dans toute la suite, XOR désigne l'opération « OU EXCLUSIF, bit à bit ». On rappelle que, au niveau d'un bit, appliquer un XOR avec un bit 0 conserve le bit initial et appliquer un XOR avec un bit 1 retourne le bit initial. Le masque s'obtient par exemple par un générateur pseudo-aléatoire initialisé de la même façon des deux côtés. Le codage DES en mode OFB, standardisé depuis 1980, revient à utiliser un générateur pseudo-aléatoire particulier utilisant l'algorithme de cryptage DES.

Tous ces algorithmes fournissent des textes cryptés dans lesquels tous les octets sont équiprobables.

Malheureusement, ces algorithmes ne peuvent pas être utilisés directement pour le cryptage du courrier électronique. En effet les divers serveurs et autres dispositifs de traitement par lesquels transitent les courriers électroniques sur Internet considèrent certains octets comme des caractères de contrôle. Ces symboles peuvent alors provoquer des comportements parasites, comme par exemple le rajout systématique d'un octet x0D - retour chariot - dès que passe un octet x0A - à la ligne - non accompagné de son x0D retour chariot, ou la non prise en compte de la suite du message dès que passe un octet x00 qui est considéré comme une fin de message. N.B. : ici et dans toute la suite du texte, on note xAB l'octet contenant le nombre s'écrivant AB en codage hexadécimal. Ces perturbations rendent le message illisible et impossible à décrypter à l'arrivée.

Pour remédier à cet inconvénient, certains systèmes de cryptage du courrier électronique regroupent les bits par paquet de 6, chacun de ces paquets étant représenté par un octet autre qu'un caractère de contrôle. Cela revient donc à transmettre 8 bits pour 6 bits utiles, et augmente donc d'un tiers le volume de données à transmettre.

Une autre solution peut être mise en oeuvre en utilisant le codage dit ASCII à 7 bits, les symboles qui n'ont pas de code sur 7 bits - lettres accentuées, caractères spéciaux... - étant recodés sur deux symboles à 7 bits. La transmission se fait sur des octets (8 bits), dont le bit de poids fort est à 0. Si on utilise un système de cryptage par masque XOR comme décrit précédemment, on n'utilise que 7 bits du masque et on ne modifie pas le bit de poids fort qui, après application du XOR, reste à 0. Lorsque l'octet ainsi obtenu prend une valeur indésirable (x00, x0D, x0A,...) il suffit de forcer artificiellement à 1 son bit de poids fort, ce qui revient à rajouter 128 à sa valeur, avant de l'envoyer sur le réseau. L'opération de décryptage est similaire au cryptage : on applique le même masque XOR on reconstitue le texte initial après avoir forcé à 0 le bit de poids fort.

Cette méthode règle donc le problème des valeurs susceptibles de provoquer des phénomènes parasites indésirables. Par contre, elle nécessite, lors de la transmission, l'utilisation de 8 bits par symboles, alors que le message initial était codé sur 7 bits par symboles, d'où une augmentation d'un septième du volume de données à transmettre. Et dans certains cas, les caractères dont le bit de poids fort est à 1 peuvent provoquer d'autres effets indésirables lors de la transmission. D'une façon générale, le principal inconvénient des techniques de ce type est que le jeu de symboles utilisé par le message crypté est différent de celui utilisé pour le message en clair ce qui peut être rédhibitoire pour certaines applications. Par ailleurs l'utilisation de ces techniques reste limitée au cas du codage ASCII à 7 bits. Ces techniques ne sont donc pas compatibles avec les évolutions comme le codage ASCII 8 bits ou le codage Unicode 16 bits pour prise en compte d'alphabets non latins - cyrillique, grec, arabe, hébreux, japonais, chinois... .

Dans ce contexte, le document EP-A-1 063 811 enseigne l'utilisation d'un générateur aléatoire, fournissant une suite de bits aléatoires dont le nombre de résultats possibles est une puissance de 2. Ledit document utilise des opérations arithmétiques dans le corps de Galois GF(2^{b}) en particulier des additions et des multiplications pour générer les permutations visées dans la présente invention. Or le résultat de ces permutations est susceptible de fournir comme résultat un élément quelconque de GF(2^{b}) (éventuellement à l'exception de zéro si on part d'un élément non nul et si on se limite à des multiplications par des éléments non nuls). Le document EP-A-1 063 811 n'enseigne aucune méthode permettant d'assurer que le résultat du cryptage se compose uniquement de symboles inclus dans l'alphabet de message. En particulier, ledit document ne s'intéresse pas au nombre d'éléments de l'alphabet de message et n'enseigne pas l'opération de numérotation qui réalise une bijection entre l'alphabet de message et l'ensemble des entiers modulo N (N n'étant pas en général une puissance de 2). C'est bien, selon l'invention, ce trait technique qui permet ensuite d'effectuer un cryptage/décryptage en mettant en oeuvre des opérations mathématiques dans ledit ensemble des entiers modulo N, et d'assurer que le résultat qu'on obtiendra ne se composera que de symboles appartenant à l'alphabet de message.

### La solution selon l'invention

### Procédé selon l'invention

L'invention concerne un procédé pour le cryptage et le décryptage d'une information. L'information est représentée par une suite de symboles. Les symboles sont pris dans un ensemble de symboles appelé ci-après l'alphabet.

Le procédé est caractérisé en ce qu'il met en oeuvre un générateur pseudo-aléatoire fournissant une séquence de valeurs dénommée ci-après séquence aléatoire. Les valeurs formant la séquence aléatoire sont incluses dans un ensemble ci-après dénommé l'espace des valeurs aléatoires.

Le générateur pseudo-aléatoire peut être, avant utilisation et fourniture de la séquence aléatoire, initialisé au moyen d'une suite de nombres ci-après dénommée clé d'initialisation.

La clé d'initialisation détermine la séquence aléatoire qui sera fournie par le générateur pseudo-aléatoire, de telle sorte qu'après une initialisation ultérieure utilisant la même clé d'initialisation la séquence de valeurs fournies sera la même qu'après la première initialisation. Le générateur pseudo-aléatoire est en outre caractérisé en ce que la connaissance de la séquence des valeurs fournies ne permet pas de retrouver en un temps raisonnable la clé d'initialisation.

Le procédé comprend trois étapes préalables.

La première étape préalable consiste à séparer en deux parties disjointes l'alphabet, l'une des parties est ci-après dénommée l'alphabet de contrôle et est composée de symboles destinés à ne pas être modifiés lors du cryptage, l'autre partie est ci-après dénommée l'alphabet de message et est composée de symboles destinés à être éventuellement modifiés lors du cryptage. Ainsi, chacun des symboles utilisés pour représenter l'information est inclus, soit dans l'alphabet de contrôle, soit dans l'alphabet de message, aucun symbole n'est commun à ces deux alphabets.

La deuxième étape préalable consiste à définir un ensemble, appelé alphabet de masque, formé de tout ou partie des éléments de l'espace des valeurs aléatoires.

La troisième étape préalable consiste à affecter à chaque élément de l'alphabet de masque une permutation de l'alphabet de message.

Les trois étapes préalables sont réalisées une fois pour toutes avant la première mise en oeuvre du procédé.

La mise en oeuvre du procédé, pour réaliser l'opération de cryptage d'une information à crypter, comprend les étapes préliminaires suivantes :
- l'étape de prendre en compte une suite de nombres ci-après dénommée la clé primaire de cryptage,
- l'étape de construire la clé d'initialisation à partir de tout ou partie de la clé primaire de cryptage.
- l'étape d'initialiser le générateur pseudo-aléatoire à l'aide de la clé d'initialisation.

Le procédé consiste à sélectionner l'un après l'autre les symboles composant l'information à crypter et à crypter chacun des symboles ainsi sélectionnés en lui appliquant les opérations suivantes :
si le symbole sélectionné appartient à l'alphabet de contrôle, il n'est pas modifié,
si le symbole sélectionné appartient à l'alphabet de message les étapes suivantes sont exécutées :
   - l'étape de lire la prochaine valeur de la séquence aléatoire fournie par le générateur pseudo-aléatoire,
   - si la valeur lue à l'étape précédente n'est pas un élément de l'alphabet de masque, l'étape de réitérer l'étape précédente jusqu'à obtention d'un élément de l'alphabet de masque,
l'élément de l'alphabet de masque, déterminé à l'étape précédente, sera ci-après dénommé l'élément de masque.

Les opérations comprennent également les étapes suivantes :
- l'étape de sélectionner la permutation de l'alphabet de message affectée à l'élément de masque spécifié à l'étape précédente,
- l'étape d'appliquer au symbole sélectionné la permutation de l'alphabet de message sélectionnée à l'étape précédente,
- l'étape de remplacer le symbole sélectionné par le résultat de la permutation mise en oeuvre à l'étape précédente.

Ces opérations étant exécutées, on passe au symbole suivant de l'information à crypter, et ainsi de suite jusqu'à ce que tous les symboles de l'information à crypter aient été traités.

De préférence selon l'invention, la mise en oeuvre du procédé, pour réaliser l'opération de décryptage d'une information à décrypter, comprend les mêmes étapes préliminaires que lors du cryptage. Ainsi, le générateur pseudo-aléatoire sera initialisé de la même façon que lors du cryptage et fournira donc la même séquence de valeurs que lors du cryptage.

Le procédé consiste à sélectionner l'un après l'autre les symboles composant l'information à décrypter et à décrypter chacun des symboles ainsi sélectionnés en lui appliquant les opérations suivantes :
si le symbole sélectionné appartient à l'alphabet de contrôle, il n'est pas modifié,
si le symbole sélectionné appartient à l'alphabet de message les étapes suivantes sont exécutées :
   - l'étape de lire la prochaine valeur de la séquence aléatoire fournie par le générateur pseudo-aléatoire,
   - si la valeur lue à l'étape précédente n'est pas un élément de l'alphabet de masque, l'étape de réitérer l'étape précédente jusqu'à obtention d'un élément de l'alphabet de masque.

L'élément de l'alphabet de masque, déterminé à l'étape précédente, sera ci-après dénommé l'élément de masque.

Les opérations pour décrypter comprennent les étapes suivantes :
- l'étape de sélectionner la permutation inverse de la permutation de l'alphabet de message affectée à l'élément de masque spécifié à l'étape précédente,
- l'étape d'appliquer au symbole sélectionné la permutation inverse sélectionnée à l'étape précédente,
- l'étape de remplacer le symbole sélectionné par le résultat de la permutation mise en oeuvre à l'étape précédente.

Ces opérations étant exécutées, on passe au symbole suivant de l'information à décrypter, et ainsi de suite jusqu'à ce que tous les symboles de l'information à décrypter aient été traités.

De préférence selon l'invention, les valeurs de l'espace des valeurs aléatoires sont des nombres, de sorte que l'alphabet de masque se compose de nombres. Le procédé comprend en outre une opération préalable de numérotation de l'alphabet de message. La numérotation consiste à attribuer à chaque symbole de l'alphabet de message, sans omission ni répétition, un nombre compris entre 0 et N-1, ci-après dénommé numéro du symbole, N représentant le nombre d'éléments de l'alphabet de message. De sorte que pour tout nombre compris entre 0 et N-1 il y a un et un seul symbole de l'alphabet de message dont ce nombre est le numéro.

Dans le cas de cette variante de réalisation de l'invention, le procédé est caractérisé en ce que le résultat de la permutation de l'alphabet de message associée à un élément de masque donné, pour un symbole donné appartenant à l'alphabet de message, peut être calculé en exécutant successivement les étapes suivantes :
- l'étape de déterminer le numéro du symbole donné,
- l'étape d'ajouter l'élément de masque donné au numéro déterminé à l'étape précédente,
- l'étape de calculer le reste de la division par N du résultat de l'addition effectuée à l'étape précédente,
- l'étape de déterminer le symbole de l'alphabet de message dont le numéro est le nombre calculé à l'étape précédente, ce symbole est alors le résultat que l'on souhaitait calculer.

Il en résulte que la permutation ainsi définie correspond à une addition modulo N sur les numéros de symboles, et que le symbole déterminé à l'étape précédente est alors le résultat de cette permutation appliquée au symbole donné.

De préférence selon l'invention, les valeurs de l'espace des valeurs aléatoires sont des nombres, de sorte que l'alphabet de masque se compose de nombres. Le procédé comprend en outre une opération préalable de numérotation de l'alphabet de message. La numérotation consiste à attribuer à chaque symbole de l'alphabet de message, sans omission ni répétition, un nombre compris entre 0 et N-1, ci-après dénommé numéro du symbole, N représentant le nombre d'éléments de l'alphabet de message. De sorte que pour tout nombre compris entre 0 et N-1 il y a un et un seul symbole dont ce nombre est le numéro.

Dans le cas de cette variante de réalisation, le procédé est caractérisé en ce que le résultat de la permutation de l'alphabet de message associée à un élément de masque donné, pour un symbole donné appartenant à l'alphabet de message, peut être calculé en exécutant successivement les étapes suivantes :
- l'étape de déterminer le numéro du symbole donné,
- l'étape de soustraire le élément de masque donné au numéro déterminé à l'étape précédente,
- lorsque le résultat de la soustraction effectuée à l'étape précédente est négatif, l'étape d'ajouter à ce résultat autant de fois que nécessaire le nombre N jusqu'à obtenir un nombre positif,
- l'étape de calculer le reste de la division par N du résultat de l'étape précédente,
- l'étape de déterminer le symbole de l'alphabet de message dont le numéro est le nombre calculé à l'étape précédente, ce symbole est alors le résultat que l'on souhaite calculer.

Il en résulte que la permutation ainsi définie correspond à une soustraction modulo N sur les numéros de symboles et que le symbole déterminé à l'étape précédente est alors le résultat de cette permutation appliquée au symbole donné.

De préférence selon l'invention, les valeurs de l'espace des valeurs aléatoires sont des nombres, de sorte que l'alphabet de masque se compose de nombres. Le procédé comprend en outre une opération préalable de numérotation de l'alphabet de message. La numérotation consiste à attribuer à chaque symbole de l'alphabet de message, sans omission ni répétition, un nombre compris entre 0 et N-1, ci-après dénommé numéro du symbole, N représentant le nombre d'éléments de l'alphabet de message, de sorte que pour tout nombre compris entre 0 et N-1 il y ait un et un seul symbole dont ce nombre soit le numéro.

Dans le cas de cette variante de réalisation, l'alphabet de masque ne comprend que des nombres non nuls et premiers à N. Le procédé est caractérisé en ce que le résultat de la permutation de l'alphabet de message associée à un élément de masque donné, pour un symbole donné appartenant à l'alphabet de message, peut être calculé en exécutant successivement les étapes suivantes :
- l'étape de déterminer le numéro du symbole donné,
- l'étape de multiplier par l'élément de masque donné le numéro déterminé à l'étape précédente,
- l'étape de calculer le reste de la division par N du résultat de la multiplication effectuée à l'étape précédente,
- l'étape de déterminer le symbole de l'alphabet de message dont le numéro est le nombre calculé à l'étape précédente.

Ce symbole est alors le résultat que l'on souhaitait calculer.

Il en résulte que la permutation ainsi définie correspond à une multiplication modulo N sur les numéros de symboles et que le symbole déterminé à l'étape précédente est alors le résultat de cette permutation appliquée au symbole donné.

De préférence selon l'invention, les valeurs de l'espace des valeurs aléatoires sont des nombres, de sorte que l'alphabet de masque se compose de nombres. Le procédé comprend en outre une opération préalable de numérotation de l'alphabet de message. La numérotation consiste à attribuer à chaque symbole de l'alphabet de message, sans omission ni répétition, un nombre compris entre 0 et N-1, ci-après dénommé numéro du symbole, N représentant le nombre d'éléments de l'alphabet de message, de sorte que pour tout nombre compris entre 0 et N-1 il y ait un et un seul symbole dont ce nombre soit le numéro.

Dans le cas de cette variante de réalisation, l'alphabet de masque ne comprend que des nombres non nuls et premiers à N. Le procédé est caractérisé en ce que le résultat de la permutation de l'alphabet de message associée à un élément de masque donné, pour un symbole donné appartenant à l'alphabet de message, peut être calculé en exécutant successivement les étapes suivantes :
- l'étape de déterminer le numéro du symbole donné,
- l'étape de déterminer un nombre qui, multiplié par l'élément de masque donné, diffère du numéro déterminé à l'étape précédente, d'un multiple entier de N,
- l'étape de calculer le reste de la division par N du nombre déterminé à l'étape précédente,
- l'étape de déterminer le symbole de l'alphabet de message dont le numéro est le nombre calculé à l'étape précédente.

Ce symbole est alors le résultat que l'on souhaitait calculer.

Il en résulte que la permutation ainsi définie correspond à une division modulo N sur les numéros de symboles et que le symbole déterminé à l'étape précédente est alors le résultat de cette permutation appliquée au symbole donné.

De préférence selon l'invention, les valeurs de l'espace des valeurs aléatoires sont des nombres, de sorte que l'alphabet de masque se compose de nombres. Le procédé comprend en outre une opération préalable de numérotation de l'alphabet de message. La numérotation consiste à attribuer à chaque symbole de l'alphabet de message, sans omission ni répétition, un nombre compris entre 0 et N-1, ci-après dénommé numéro du symbole, N représentant le nombre d'éléments de l'alphabet de message de sorte que pour tout nombre compris entre 0 et N-1 il y ait un et un seul symbole dont ce nombre soit le numéro.

L'alphabet de masque ne comprend que des nombres non nuls et premiers à Phi (N) où Phi (N) désigne le nombre d'entiers compris entre 1 et N-1 et premiers à N.

Dans le cas de cette variante de réalisation, le procédé est caractérisé en ce que le résultat de la permutation de l'alphabet de message associée à un élément de masque donné, pour un symbole donné appartenant à l'alphabet de message, peut être calculé en exécutant successivement les étapes suivantes :
- l'étape de déterminer le numéro du symbole donné,
- l'étape de calculer le reste de la division par N du résultat de l'élévation du numéro déterminé à l'étape précédente à une puissance égale à l'élément de masque donné,
- l'étape de déterminer le symbole de l'alphabet de message dont le numéro est le nombre calculé à l'étape précédente.

Ce symbole est alors le résultat que l'on souhaitait calculer. De sorte que la permutation ainsi définie correspond à une exponentiation modulaire sur les numéros de symboles et que le symbole déterminé à l'étape précédente est alors le résultat de cette permutation appliquée audit symbole donné.

De préférence selon l'invention, les valeurs de l'espace des valeurs aléatoires sont des nombres, de sorte que l'alphabet de masque se compose de nombres. Le procédé comprend en outre une opération préalable de numérotation de l'alphabet de message. La numérotation consiste à attribuer à chaque symbole de l'alphabet de message, sans omission ni répétition, un nombre compris entre 0 et N-1, ci-après dénommé numéro du symbole, N représentant le nombre d'éléments de l'alphabet de message, de sorte que pour tout nombre compris entre 0 et N-1 il y ait un et un seul symbole dont ce nombre soit le numéro.

L'alphabet de masque ne comprend que des nombres non nuls et premiers à Phi(N) où Phi(N) désigne le nombre d'entiers compris entre 1 et N-1 et premiers à N.

Dans le cas de cette variante de réalisation, le procédé est caractérisé en ce que le résultat de la permutation de l'alphabet de message associée à un élément de masque donné, pour un symbole donné appartenant à l'alphabet de message, peut être calculé en exécutant successivement les étapes suivantes :
- l'étape de déterminer le numéro du symbole donné,
- l'étape de déterminer un nombre positif, qui, élevé à une puissance égale à l'élément de masque donné, diffère du numéro déterminé à l'étape précédente d'un multiple entier de N,
- l'étape de déterminer le reste de la division par N du nombre déterminé à l'étape précédente,
- l'étape de déterminer le symbole de l'alphabet de message dont le numéro est le nombre calculé à l'étape précédente.

Ce symbole est alors le résultat que l'on souhaitait calculer. Il en résulte que la permutation ainsi définie correspond à l'extraction d'une racine en arithmétique modulaire sur les numéros de symboles et que le symbole déterminé à l'étape précédente est alors le résultat de cette permutation appliquée au symbole donné.

De préférence selon l'invention, le procédé comprend une opération préalable consistant à associer à chaque élément de l'alphabet de masque un quadruplet de nombres notés p, q, r et s et tels que le nombre r et le résultat de l'expression p.s-q.r soient tous deux des nombres non nuls et non multiples de N, N représentant le nombre d'éléments de l'alphabet de message. Le procédé comprend en outre une opération préalable de numérotation de l'alphabet de message, la numérotation consistant à attribuer à chaque symbole de l'alphabet de message, sans omission ni répétition, un nombre compris entre 0 et N-1, ci-après dénommé numéro du symbole, de sorte que pour tout nombre compris entre 0 et N-1 il y ait un et un seul symbole dont ce nombre soit le numéro.

Dans le cas de cette variante de réalisation, le procédé est caractérisé en ce que le résultat de la permutation de l'alphabet de message associée à un élément de masque donné, pour un symbole donné appartenant à l'alphabet de message, peut être calculé en exécutant successivement les étapes suivantes :
- l'étape de déterminer le quadruplet de nombres p, q, r et s associé à l'élément de masque donné,
- l'étape de déterminer le numéro du symbole à crypter ou à décrypter, ce numéro est ci-après noté m,
- l'étape de calculer l'expression m.r + s,
- l'étape, lorsque le résultat du calcul effectué à l'étape précédente est nul ou est un multiple de N, de calculer un nombre k tel que l'expression k.r - p soit un multiple de N,
- l'étape, lorsque le résultat du calcul effectué à l'étape précédente n'est ni zéro ni un multiple de N, de calculer un nombre positif k tel que l'expression k. (m.r + s) - (m.p + q) soit un multiple de N ,
- l'étape de calculer le reste de la division par N du nombre k calculé à l'étape précédente,
- l'étape de déterminer le symbole de l'alphabet de masque dont le numéro est le nombre calculé à l'étape précédente.

Ce symbole est alors le résultat que l'on souhaitait calculer. Il en résulte que la permutation ainsi définie correspond au calcul d'une fonction homographique en arithmétique modulaire sur les numéros de symboles et que le symbole déterminé à l'étape précédente est alors le résultat de cette permutation appliquée au symbole donné.

De préférence selon l'invention, le procédé met en oeuvre un premier générateur pseudo-aléatoire pouvant être initialisé à l'aide de la clé d'initialisation. Les valeurs fournies par le premier générateur pseudo-aléatoire sont utilisées comme données en entrée d'un algorithme de hachage dont les résultats sont utilisés pour fournir la séquence aléatoire. Le générateur pseudo-aléatoire consiste en la composition du premier générateur pseudo-aléatoire et de l'algorithme de hachage.

De préférence selon l'invention, le procédé comprend en outre l'étape préliminaire de construire à partir de tout ou partie de la clé primaire de cryptage une suite de nombres appelée ci-après clé secondaire de cryptage. Le procédé met en oeuvre un premier générateur pseudo-aléatoire qui peut être initialisé à l'aide de la clé d'initialisation. Les valeurs fournies par le premier générateur pseudo-aléatoire sont cryptées à l'aide d'un premier algorithme de cryptage utilisant comme clé de cryptage la clé secondaire de cryptage. Les résultats du premier algorithme de cryptage sont utilisés pour fournir la séquence aléatoire.

Le générateur pseudo-aléatoire consiste en la composition du premier générateur pseudo-aléatoire et du premier algorithme de cryptage.

### Système selon l'invention

L'invention concerne également un système pour le cryptage et le décryptage d'une information. L'information est représentée par une suite de symboles. Les symboles sont pris dans un ensemble de symboles appelé ci-après l'alphabet.

L'alphabet est séparé en deux parties disjointes. L'une des parties est ci-après dénommée l'alphabet de contrôle et est composée de symboles destinés à ne pas être modifiés lors du cryptage, l'autre partie est ci-après dénommée l'alphabet de message et est composée de symboles destinés à être éventuellement modifiés lors du cryptage.

Le système est plus particulièrement destiné à sécuriser les communications entre un ordinateur ci-après dénommé l'ordinateur client et un réseau formé d'un ou plusieurs autres ordinateurs, le système est intercalé entre l'ordinateur client et le réseau. De sorte que toute information circulant entre le ordinateur client et le réseau et devant être cryptée ou décryptée, passe à travers le système. Le système comprend un générateur pseudo-aléatoire fournissant une séquence de valeurs dénommée ci-après séquence aléatoire. Les valeurs formant ladite séquence aléatoire sont comprises dans un ensemble ci-après dénommé l'espace des valeurs aléatoires. Certaines de ces valeurs sont incluses dans un sous-ensemble de l'espace des valeurs aléatoires. Ce sous-ensemble est ci-après dénommé alphabet de masque.

Le générateur pseudo-aléatoire peut être, avant utilisation et fourniture de la séquence de valeurs, initialisé au moyen d'une suite de nombres ci-après dénommée clé d'initialisation. La clé d'initialisation détermine la séquence aléatoire qui sera fournie par le générateur.

Le système comprend en outre :
- deux unités d'entrée sortie, l'une d'entre elles étant destinée à assurer les communications entre le système et l'ordinateur client, l'autre d'entre elles étant destinée à assurer les communications entre ledit système et ledit réseau,
- des premiers moyens de traitement permettant de prendre en compte une suite de nombres ci-après dénommée la clé primaire de cryptage, et de construire la clé d'initialisation à partir de tout ou partie de la clé primaire de cryptage,
- des seconds moyens de traitement permettant de décider si une valeur appartenant à l'espace de valeurs aléatoires appartient à l'alphabet de masque,
- des troisièmes moyens de traitement permettant de lire les valeurs successives fournies par le générateur pseudo-aléatoire, jusqu'à obtenir un élément appartenant à l'alphabet de masque,
- des quatrièmes moyens de traitement permettant de décider, parmi les symboles transitant à travers ledit système, quels sont les symboles qui doivent être cryptés ou décryptés et quels sont les symboles qui doivent être transmis sans modification,
- des cinquièmes moyens de traitement.

Ces cinquièmes moyens de traitement permettent d'une part, à partir d'un élément donné de l'alphabet de masque, ci-après appelé l'élément de masque, de sélectionner une permutation de l'alphabet de message. Cette permutation est ci-après appelée permutation affectée à l'élément de masque.

Ces cinquièmes moyens de traitement permettent d'autre part, la permutation affectée à l'élément de masque étant ainsi sélectionnée, et un élément donné de l'alphabet de message étant fourni par l'une des deux unités d'entrée sortie, de déterminer le résultat de cette permutation appliquée audit élément donné fourni, et d'envoyer sur l'autre des deux dites unités d'entrée sortie le résultat ainsi déterminé.

De préférence selon l'invention, les cinquièmes moyens de traitement permettant en outre de sélectionner la permutation inverse de la permutation affectée à un élément de l'alphabet de masque.

De préférence selon l'invention, les valeurs de l'espace des valeurs aléatoires étant des nombres, les cinquièmes moyens de traitement permettent en outre d'associer un nombre à un symbole de l'alphabet de message, de faire une addition en arithmétique modulaire entre le nombre et un élément de l'alphabet de masque, et d'associer au résultat de cette addition un élément de l'alphabet de message.

De préférence selon l'invention, les valeurs de l'espace des valeurs aléatoires étant des nombres, les cinquièmes moyens de traitement permettent en outre d'associer un nombre à un symbole de l'alphabet de message, de faire une soustraction en arithmétique modulaire entre le nombre et un élément de l'alphabet de masque, et d'associer au résultat de cette soustraction un élément de l'alphabet de message.

De préférence selon l'invention, les valeurs de l'espace des valeurs aléatoires étant des nombres, les cinquièmes moyens de traitement permettent en outre d'associer un nombre à un symbole de l'alphabet de message, de faire une multiplication en arithmétique modulaire entre le nombre et un élément de l'alphabet de masque, et d'associer au résultat de cette multiplication un élément de l'alphabet de message.

De préférence selon l'invention, les valeurs de l'espace des valeurs aléatoires étant des nombres, les cinquièmes moyens de traitement permettent en outre d'associer un nombre à un symbole de l'alphabet de message, de faire une division en arithmétique modulaire entre le nombre et un élément de l'alphabet de masque, et d'associer au résultat de cette division un élément de l'alphabet de message.

De préférence selon l'invention, les valeurs de l'espace des valeurs aléatoires étant des nombres, les cinquièmes moyens de traitement permettent en outre d'associer un nombre à un symbole de l'alphabet de message, de faire une exponentiation en arithmétique modulaire du nombre avec pour exposant un élément de l'alphabet de masque, et d'associer au résultat de cette exponentiation un élément de l'alphabet de message.

De préférence selon l'invention, les valeurs de l'espace des valeurs aléatoires étant des nombres, les cinquièmes moyens de traitement permettent en outre d'associer un nombre à un symbole de l'alphabet de message, de faire une extraction de racine en arithmétique modulaire, et d'associer au résultat de cette extraction de racine un élément de l'alphabet de message.

De préférence selon l'invention, le nombre de symboles composant l'alphabet de message étant ci-après dénommé N, le système comporte en outre des sixièmes moyens de traitement permettant d'associer à un élément de l'alphabet de masque un quadruplet de nombres notés p, q, r et s. Les cinquièmes moyens de traitement permettent en outre :
- d'associer à un symbole de l'alphabet de message, un nombre compris entre 0 et N-1, ce nombre est ci-après noté m,
- de calculer l'expression m.r + s,
- de déterminer si l'expression m.r + s est nulle ou multiple de N,
- de calculer un nombre k compris entre 0 et N-1 et tel que l'expression k.r - p soit un multiple de N,
- de calculer un nombre k compris entre 0 et N-1 et tel que l'expression k. (m.r + s) - (m.p + q) soit un multiple de N,
- d'associer à un nombre k ainsi calculé un élément de l'alphabet de message.

De préférence selon l'invention, le système comprend un premier générateur pseudo-aléatoire pouvant être initialisé à l'aide de la clé d'initialisation et des moyens de calcul permettant d'appliquer un algorithme de hachage aux valeurs fournies par le premier générateur pseudo-aléatoire. Les résultats de l'algorithme de hachage sont transmis aux seconds et troisièmes moyens de traitement. Le générateur pseudo-aléatoire consiste en la réunion du premier générateur pseudo-aléatoire et des moyens de calcul permettant d'appliquer un algorithme de hachage aux valeurs fournies par le premier générateur pseudo-aléatoire.

De préférence selon l'invention, le système comprend un premier générateur pseudo-aléatoire pouvant être initialisé à l'aide de la clé d'initialisation. Le système comprend en outre des septièmes moyens de traitement permettant de construire à partir de tout ou partie de la clé primaire de cryptage une suite de nombres appelée ci-après clé secondaire de cryptage. Le procédé comprend en outre des moyens de calcul permettant d'appliquer un algorithme de cryptage, utilisant comme clé de cryptage la clé secondaire de cryptage, l'algorithme de cryptage est appliqué aux valeurs fournies par le premier générateur pseudo-aléatoire. Les résultats de l'algorithme de cryptage sont transmis aux seconds et troisièmes moyens de traitement. Le générateur pseudo-aléatoire consiste en la réunion du premier générateur pseudo-aléatoire et des moyens de calcul permettant d'appliquer un algorithme de cryptage aux valeurs fournies par le premier générateur pseudo-aléatoire.

### Description détaillée de l'invention

La présente invention concerne un système de cryptage dans lequel le texte crypté utilise le même jeu de symboles que le message en clair, tout en évitant les effets parasites indésirables provoqués par certaines valeurs particulières. Le texte crypté aura par construction la même longueur que le texte en clair.

Avant mise en oeuvre de l'invention, on sépare en deux parties le jeu de symboles utilisé.

La première partie, ci-après appelée alphabet de contrôle, se compose des caractères de contrôle c'est-à-dire de symboles tels que sauts de lignes, retours chariot, fin de message, et plus généralement de tous les symboles qui peuvent provoquer, de la part des divers serveurs et autres dispositifs de traitement par lesquels transitent les courriers électroniques sur Internet, un comportement autre que la simple transmission du symbole. Les caractères de contrôle seront transmis en clair.

La seconde partie, ci-après appelée alphabet de message, se compose de tous les autres symboles. Ce sont ces symboles qui représentent le message proprement dit.

Le procédé et le système de cryptage, objets de la présente invention, mettent en oeuvre un générateur pseudo-aléatoire. Ce générateur pseudo-aléatoire fournit des valeurs comprises dans un ensemble de valeurs ci-après dénommé espace des valeurs aléatoires. La suite des valeurs successivement fournies par le générateur pseudo-aléatoire sera ci-après dénommée séquence aléatoire.

Le générateur pseudo-aléatoire est initialisé au moyen d'une suite de nombres appelée clé d'initialisation. La séquence aléatoire fournée par le générateur pseudo-aléatoire dépend de la clé d'initialisation et après chaque initialisation utilisant la même clé d'initialisation, on obtient la même séquence aléatoire.

Lors de la mise en oeuvre du procédé de cryptage et du système de cryptage, on utilise une clé de cryptage, appelée ci-après clé primaire de cryptage, la connaissance de cette clé primaire de cryptage devant ultérieurement permettre de décrypter le message qui avait été crypté avec cette clé. La clé d'initialisation est déterminée à partir de la clé de cryptage. L'utilisation de la même clé primaire de cryptage lors du décryptage assure donc que la séquence aléatoire utilisée lors du décryptage sera la même que celle utilisée lors du cryptage.

Tous les éléments de l'espace des valeurs aléatoires ne sont pas utilisables lors du cryptage. On définira un sous-ensemble, comprenant tout ou partie des éléments de l'espace des valeurs aléatoires. Ce sous-ensemble sera ci-après appelé alphabet de masque, et seuls les éléments de l'alphabet de masque seront utilisés lors du cryptage et du décryptage. A chaque élément de l'alphabet de masque on associe une permutation particulière de l'alphabet de message, c'est-à-dire une application biunivoque de l'alphabet de message dans lui-même. Cette application sera utilisée lors du cryptage. Comme elle est biunivoque, deux symboles différents auront donc deux images différentes, permettant ainsi un décryptage sans ambiguïté. Lors du décryptage, on utilisera l'application réciproque c'est-à-dire la permutation inverse de la permutation de celle utilisée lors du cryptage.

Une réalisation particulière de l'invention objet du présent brevet correspond à un choix particulier des permutations associées aux éléments de l'alphabet de masque. Sur le plan mathématique, une réalisation particulière de l'invention correspond donc à une application de l'alphabet de masque à valeurs dans l'ensemble des permutations de l'alphabet de message.

Le nombre de choix possibles est très élevé. Si l'alphabet de message se compose de N éléments, il y a factorielle(N) permutations différentes de l'alphabet de message (où factorielle(N) représente le produit des N premiers entiers). Ce nombre augmente extrêmement rapidement avec N. Par exemple, pour N=128, factorielle(N) est un nombre à 215 chiffres en notation décimale classique.

De façon plus détaillée, l'opération de cryptage est réalisée comme suit. On commence par initialiser le générateur pseudo-aléatoire à l'aide de la clé d'initialisation. On lit ensuite séquentiellement, symbole par symbole, l'information à crypter. Si le symbole rencontré appartient à l'alphabet de contrôle, il n'est pas modifié. S'il appartient à l'alphabet de message, on lit l'élément suivant fourni par le générateur pseudo-aléatoire. Si cet élément ainsi lu n'appartient pas à l'alphabet de masque, on lira l'élément suivant fourni par le générateur pseudo-aléatoire, et, si besoin, on réitérera cette opération, ce jusqu'à obtenir un élément de l'alphabet de masque, appelé ci-après élément de masque. On utilisera la permutation de l'alphabet de message associée à cet élément de masque. Cette permutation est, en tant qu'application de l'alphabet de message à valeurs dans lui-même, appliquée au symbole à crypter, le résultat venant prendre la place du symbole à crypter. On réitère ces opérations pour chacun des symboles composant l'information à crypter. La suite des éléments de masques générés lors de ces opérations s'appelle le masque de cryptage.

L'opération de décryptage se fait de façon exactement similaire en utilisant, pour chaque symbole, non pas la permutation associée à l'élément de masque, mais la permutation inverse de cette dernière. La réinitialisation, avant décryptage, du générateur pseudo-aléatoire à l'aide de la même clé d'initialisation que lors du cryptage assure que le masque de cryptage utilisé lors du décryptage sera le même que celui utilisé lors du cryptage.

Donnons maintenant, à titre illustratif et nullement limitatif des possibilités de l'invention, quelques exemples de mise en oeuvre de cette invention. Le nombre N désignant comme précédemment le nombre de symboles contenus dans l'alphabet de message, on choisit, une fois pour toutes, une numérotation de l'alphabet de message, c'est-à-dire une fonction f qui à un symbole x de l'alphabet de message associe un nombre f(x) compris entre 0 et N-1, et ce de façon biunivoque. Cette fonction sera appelée ci-après fonction de numérotation. D'un point de vue mathématique la fonction de numérotation est une bijection entre l'alphabet de message et l'ensemble des entiers modulo N. On appellera f-1 la fonction inverse de la fonction de numérotation, c'est-à-dire la fonction, qui à un nombre y compris entre 0 et N-1 associe un symbole x de l'alphabet de message tel que f(x) soit égal à y.

Explicitons ici, à titre illustratif et nullement limitatif des possibilités de l'invention, un cas particulier d'une telle fonction f dans un exemple où le codage des symboles se fait en ASCII sur 8 bits, c'est-à-dire sur un octet, représenté par un nombre compris entre 0 et 255, et dans lequel les caractères de contrôle sont les trois octets x00, x0A et x0D représentés par les nombres 0, 10 et 13. Dans cet exemple, le nombre N de symboles contenus dans l'alphabet de message est égal à 253. Le calcul de la fonction de numérotation f s'effectue comme suit. Étant donné un octet représentant un élément donné de l'alphabet de message, on considère le nombre x compris entre 0 et 255 qui le représente. On applique alors successivement les trois opérations ci-après, la fonction Dec étant l'opération consistant à décrémenter un entier d'une unité :
Dec (x)
IF x>12 THEN Dec(x)
IF x>8 THEN Dec(x)

Après application de ces trois opérations, le nombre x a une valeur comprise entre 0 et 252 et est le nombre associé par la fonction de numérotation f à l'élément donné de l'alphabet de message.

Dans le présent exemple, les valeurs fournies par le générateur pseudo-aléatoire seront des nombres et l'alphabet de masque aura même taille que l'alphabet de message et se composera de l'ensemble des nombres compris entre 0 et 252. Pour définir précisément le système de cryptage utilisé, il faudra choisir 253 permutations particulières de l'alphabet de masque parmi les factorielle (253), qui est un nombre à 500 chiffres en notation décimale, permutations possibles. Le nombre de possibilités est donc gigantesque.

Donnons maintenant, à titre illustratif et nullement limitatif des possibilités de l'invention, un choix particulier de permutation de l'alphabet de message. Nous faisons ici le choix d'associer à un élément m de l'alphabet de masque la permutation, c'est-à-dire l'application biunivoque, qui à un nombre x compris entre 0 et 252 associe le reste par 253 de la somme x+m. Les permutations choisies correspondent donc à des additions en arithmétique modulo 253. Les permutations inverses correspondent bien évidemment à des soustractions modulo 253.

De façon très détaillée, l'algorithme de cryptage consiste, une fois initialisé le générateur pseudo-aléatoire à l'aide de la clé d'initialisation, à sélectionner l'un après l'autre les symboles composant ladite information à crypter, et à crypter chacun des symboles ainsi sélectionnés en lui appliquant les opérations suivantes :
si ledit symbole sélectionné appartient à l'alphabet de contrôle, il n'est pas modifié,
si ledit symbole sélectionné appartient à l'alphabet de message on lui applique les opérations (a) à (g) suivantes :
   (a) on applique, au code ASCII (nombres compris entre 0 et 255) dudit symbole sélectionné, la fonction de numérotation f définie préalablement, ce qui fournit un nombre x compris entre 0 et 252.
   (b) on lit le prochain nombre fourni par ledit générateur pseudo-aléatoire ,
   (c) si le nombre lu à l'étape précédente est supérieur à 252, on réitère l'opération précédente jusqu'à obtention d'un nombre inférieur ou égal à 252, qui sera, ci-après, noté m.
   (d) on effectue l'addition y = x+m
   (e) si y est supérieur à 252, on lui retranche 253
   (f) le nombre y a maintenant une valeur comprise entre 0 et 252, et on lui applique la fonction f-1 , fonction inverse de la fonction de numérotation, qui fournit le symbole z de l'alphabet de message tel que f(z) soit égal à y.
   (g) ce symbole z remplacera ledit symbole sélectionné de ladite information à crypter.

Ces opérations étant exécutées, on passe au symbole suivant de l'information à crypter, et ainsi de suite jusqu'à ce que tous les symboles de l'information à crypter aient été traités ;

Le décryptage se fait de façon similaire après nouvelle initialisation du générateur pseudo-aléatoire à l'aide de la clé d'initialisation, les opérations (d) et (e) étant remplacées par les opérations (d') et (e') ci-après
(d') on effectue la soustraction y = x-m
(e') si y est négatif, on lui ajoute 253

L'une des idées originales de l'invention, dans cet exemple particulier, consiste à utiliser les masques non pas avec un opérateur XOR mais avec une addition dans l'ensemble des entiers modulo 253. Mais il fallait avoir eu au préalable l'idée de séparer le jeu de caractères en deux parties pour se débarrasser des caractères de contrôle, puis l'idée de ramener, par la bijection f, l'alphabet de message à l'ensemble des entiers modulo N (avec ici N=253). L'innovation résulte, dans cette réalisation particulière, de la juxtaposition de ces trois idées. Notons que l'idée de l'addition modulo N avec les éléments d'un masque est en substance dans les travaux de Vigenère, lire par exemple Blaise de Vigenère, Traicté des chiffres, ou secretes manieres d'escrire, paru en 1586, bien qu'au XVIième siècle on ignorât tout de l'arithmétique modulaire.

L'utilisation d'une addition modulaire ou d'une soustraction modulaire, détaillée dans cet exemple particulier, est un cas particulier simple de réalisation de l'invention objet du présent brevet. Il a été présenté ici en arithmétique modulo N avec N = 253, mais il peut être réalisé de façon similaire pour toute valeur raisonnable de N, en adaptant l'algorithme de calcul de la fonction de numérotation f.

L'addition et la soustraction peuvent être remplacées par d'autres permutations de l'alphabet de message.

On peut par exemple utiliser la multiplication modulaire. Les opérations (d) et (e) sont alors remplacées par le calcul du produit x.m (où on note par un point « . » l'opération de multiplication), puis du reste par N du résultat de cette multiplication. Mais pour que l'opération ainsi réalisée soit une bijection, il faut que le nombre m soit premier à N. Il faut donc, dans l'étape (c), non seulement refuser les nombres supérieurs à N, mais aussi les nombres qui ne sont pas premiers à N.

L'opération réciproque de la multiplication par m modulo N est la division par m modulo N, qui, elle-aussi, nécessite que le nombre m soit premier à N. Connaissant le nombre x, il s'agira, à l'étape (d) de trouver un nombre y tel que le produit y.m diffère de x d'un multiple entier de N. Il faut donc en pratique trouver deux entiers y et z tels que y.m+N.z = x. Le théorème de Bezout permet de prouver qu'il y a une solution, pour toutes les valeurs possibles de x, dès que m est premier à N. A l'étape (e), on calculera le reste par N de ce nombre y.

On peut aussi utiliser l'exponentiation modulaire, les opérations (d) et (e) étant ici remplacées par le calcul du reste par N de l'élévation de x à la puissance m. Cette exponentiation modulaire est une bijection, et admet donc une réciproque, lorsque le nombre N n'a pas de facteurs carrés et que l'exposant m est un nombre non nul premier à Phi(N), où Phi(N) représente le nombre d'entiers compris entre 1 et N-1 et premiers à N.

L'opération réciproque est l'extraction de racine m-ième en arithmétique modulo N, c'est-à-dire le calcul du reste par N d'un nombre y qui, élevé à la puissance m, modulo N, redonne un nombre qui diffère de x d'un multiple entier de N. On peut démonter que cette opération est équivalente à une élévation de x à une puissance p, modulo N, où p est tel que l'expression m.p-1 soit un multiple entier de Phi(N). On peut trouver un nombre p, vérifiant cette condition, dès que m est non nul et premier à Phi(N).

Dans les exemples ci-dessus, il est possible de retrouver la valeur de l'élément de masque m, modulo N ou modulo Phi(N) selon le cas, par la simple donnée du symbole en clair et du symbole crypté. Plus précisément, la donnée du message en clair et du message crypté permet de déterminer le masque, donc donne des indications très fortes sur la séquence aléatoire fournie par le générateur pseudo-aléatoire. Le nombre d'éléments de l'alphabet de masque est proche du nombre d'éléments de l'alphabet de message.

On peut mettre en oeuvre l'invention en choisissant des permutations plus sophistiquées conçues de façon que la connaissance d'un symbole en clair et en crypté ne permette pas de déterminer précisément l'élément de masque utilisé. Un exemple peut être fourni par des fonctions homographiques. On se place dans le cas où le nombre N d'éléments de l'alphabet de message est un nombre premier et on choisit un alphabet de masque significativement plus grand que l'alphabet de message. L'idéal serait que le nombre d'éléments de l'alphabet de masque soit de l'ordre de grandeur du cube du nombre N d'éléments de l'alphabet de message, ou même plus grand. On choisit alors, pour chaque élément de l'alphabet de masque, quatre nombres notés p, q, r et s compris entre 0 et N-1 et tels que d'une part le nombre r et d'autre part le résultat de l'expression p.s-q.r soient tous deux non nuls et non multiples de N. Ces quatre nombres sont alors les 4 paramètres d'une fonction homographique en arithmétique modulaire, fonction qui remplacera celle mise en oeuvre à l'étape (d) des exemples précédents. Cette fonction est la transposition en arithmétique modulaire de la fonction qui, en arithmétique classique sur les nombres réels s'écrit y = (p.x + q) / (r.x + s) et a pour graphe une hyperbole d'asymptotes parallèles aux axes de coordonnées. En arithmétique classique, toutes les valeurs de y sont atteintes une et une seule fois sauf y = p/r (qui correspond à l'ordonnée de l'asymptote horizontale) et la fonction n'est pas définie pour x = -s/r, qui correspond à l'abscisse de l'asymptote verticale. Pour que la fonction devienne une bijection, on conviendra de donner à la fonction la valeur p/r lorsque la variable x vaut - s/r. Pour transposer le calcul de cette fonction en arithmétique modulo N, on calcule dans un premier temps le dénominateur c'est-à-dire l'expression r.x+s . Si le résultat de ce calcul est nul ou est un multiple de N, la valeur y prise par la fonction est une valeur comprise entre 0 et N-1 et telle que l'expression r.y-p soit un multiple, éventuellement nul, de N . Dans le cas contraire la valeur y prise par la fonction est une valeur comprise entre 0 et N-1 et telle que l'expression (r.x+s).y - (p.x+q) soit un multiple, éventuellement nul, de N. La fonction réciproque de cette fonction homographique est elle-même une fonction homographique dont les paramètres sont faciles à calculer.

On peut développer des procédés et des systèmes de cryptage selon la présente invention en utilisant des familles de permutations bien plus riches que dans les exemples illustratifs présentés précédemment. On peut par exemple associer à certains éléments de l'alphabet de masque des additions modulaires, à d'autres des multiplications modulaires, à d'autres encore, des permutations bien plus complexes. Plus ces permutations seront complexes, plus sera difficile la tâche d'un éventuel pirate désirant attaquer le système, mais le gain en sécurité apporté par une plus grande complexité des permutations se paiera en terme de temps de calcul nécessaire au cryptage et au décryptage de l'information.

La technique de cryptage présentée ci-dessus a l'inconvénient suivant : la connaissance simultanée du texte en clair et du texte à chiffrer permet d'obtenir des indications sur le masque. Dans le cas où on utilise une addition, une soustraction, une multiplication ou une division en arithmétique modulaire, il suffit de connaître un symbole en clair et le même symbole crypté pour déterminer immédiatement l'élément de masque qui a servi à crypter ce symbole. C'est à peine plus difficile dans le cas de l'exponentiation modulaire ou de l'extraction de racine. L'utilisation de fonctions plus sophistiquées comme la fonction homographique, ne permettent plus de déterminer de façon précise le masque mais elles donnent néanmoins des indications susceptibles d'être utiles à un pirate qui souhaiterait attaquer le système. Ce peut être rédhibitoire lorsqu'on utilise un générateur pseudo-aléatoire de faible qualité, dans lequel la connaissance des aléas précédemment tirés est susceptible de fournir des informations sur les tirages futurs. Une telle attaque est appelée attaque par prédiction sur le générateur pseudo-aléatoire. Certains générateurs peudo-aléatoires évitent cet inconvénient. Il en est ainsi des générateurs basés sur un algorithme de chiffrement par blocs utilisé en mode rétroaction de sortie, dit OFB pour « Output-feedback », tels que décrits page 216 et suivantes de la seconde édition de « Cryptographie Appliquée » de Bruce Schneier, - International Thomson Publishing France, 1997. Il en de même pour le procédé décrit dans la demande de brevet déposée à l'INPI le 12 septembre 2001 sous le numéro FR0111776 et publiée le 14 mars 2003 sous le numéro FR 2829643.

Lorsque le générateur pseudo-aléatoire ne parait pas suffisamment protégé contre les attaques par prédiction, on peut introduire une étape intermédiaire consistant à effectuer divers traitements sur les aléas issus du générateur aléatoire en vue d'obtenir des masques dont la connaissance ne permet pas d'obtenir des informations utiles sur les aléas qui ont permis de les générer. Une technique possible est de soumettre les aleas issus du générateur aléatoire à un algorithme de hachage à sens unique, voir par exemple « Cryptographie Appliquée » de Bruce Schneier, déjà cité, chapitres 2.3, 2.4 et 18, les empreintes fournies par ce hachage servant ensuite à générer les masques. Une autre technique possible consiste à utiliser un algorithme de cryptage qui s'appliquera aux aléas issus du générateur aléatoire et dont les résultats serviront à générer les masques. La clé de cryptage utilisée pour cette génération de masque pourra être calculée à partir de la clé primaire de cryptage définie précédemment.

### Description des figures

La figure 1 présente le schéma général de l'invention.

La figure 2 illustre le cas particulier où le générateur pseudo-aléatoire GA consiste en la réunion d'un premier générateur pseudo-aléatoire et d'un système mettant en oeuvre un algorithme de hachage.

La figure 3 illustre le cas particulier où le générateur pseudo-aléatoire GA consiste en la réunion d'un premier générateur pseudo-aléatoire et d'un système mettant en oeuvre un algorithme de cryptage.

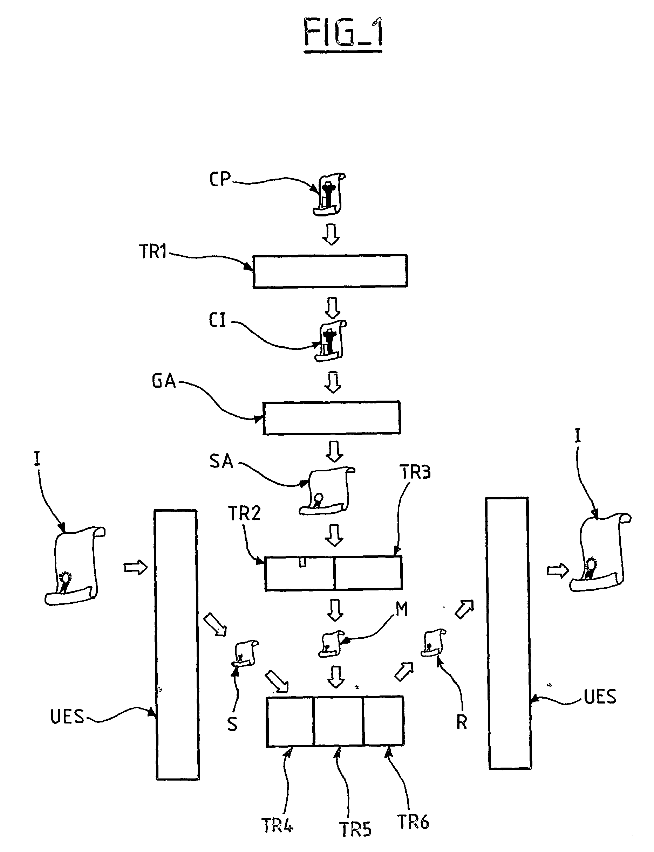

Sur la figure 1, la clé primaire de cryptage CP est utilisée par les premiers moyens de traitement TR1 pour générer la clé d'initialisation CI. Cette clé d'initialisation CI sert alors à initialiser le générateur pseudo-aléatoire GA qui fournit la séquence SA dont les éléments seront par la suite pris en compte séquentiellement. Seuls les éléments de SA qui appartiennent à l'alphabet de masque seront utilisés pour le cryptage et le décryptage. Les seconds moyens de traitement TR2 permettent de vérifier si un élément de SA appartient à l'alphabet de masque, et les troisièmes moyens de traitement lisent les valeurs successives de la séquence aléatoire SA, jusqu'à obtenir un élément M reconnu par TR2 comme appartenant à l'alphabet de masque. Cet élément M sera appelé masque M et sera transmis aux cinquièmes moyens de traitement TR5.

Les symboles S composant l'information I à crypter ou à décrypter sont lus par le moyen d'une unité d'entrée sortie UES, et transmis aux quatrièmes moyens de traitement TR4 qui permettent de décider quels sont les symboles S à transmettre sans modification et quels sont les symboles S à crypter ou à décrypter.

Étant donné un symbole S, reconnu par TR4 comme étant à crypter ou à décrypter, et le masque M fourni par TR3, les cinquièmes moyens de traitement TR5 calculent la permutation de l'alphabet de message déterminée par M ou l'inverse de cette permutation, selon qu'on désire crypter ou décrypter, et l'appliquent au symbole S pour fournir comme résultat un symbole R qui sera transmis par une unité d'entrée sortie UES et qui destiné à remplacer le symbole S dans l'information I à crypter ou à décrypter.

Dans le cas où la permutation utilisée est une fonction homographique, des sixièmes moyens de traitement TR6 sont mis en oeuvre pour déterminer les paramètres de la fonction homographique associée au masque M.

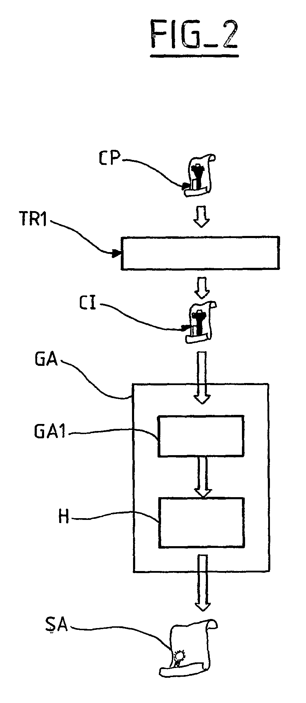

Sur la figure 2, le générateur pseudo-aléatoire GA se compose d'un premier générateur pseudo-aléatoire GA1 initialisé par la clé d'initialisation CI elle-même calculée par les moyens de traitements TR1 à partir de la clé primaire de cryptage CP. Les moyens de calcul H appliquent un algorithme de hachage aux valeurs fournies par GA1, et ce sont les résultats de cet algorithme de hachage qui forment la séquence aléatoire SA. Le générateur pseudo-aléatoire GA apparaît donc comme la réunion de GA1 et de H.

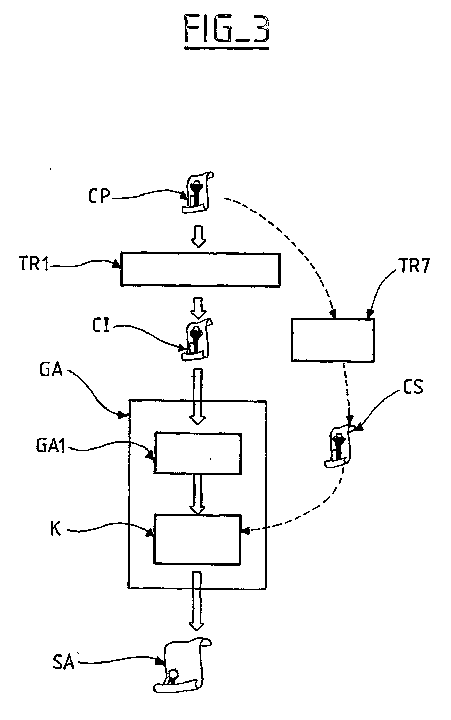

Sur la figure 3, le générateur pseudo-aléatoire GA se compose d'un premier générateur pseudo-aléatoire GA1 initialisé par la clé d'initialisation CI elle-même calculée par les moyens de traitements TR1 à partir de la clé primaire de cryptage CP. Les moyens de calcul K appliquent un algorithme de cryptage aux valeurs fournies par GA1, et ce sont les résultats de cet algorithme de hachage qui forme la séquence aléatoire SA. L'algorithme de cryptage utilise comme clé de cryptage la clé secondaire CS qui est calculée à partir de la clé primaire CP à l'aide des septièmes moyens de traitement TR7. Le générateur pseudo-aléatoire GA apparaît ici comme la réunion de GA1 et de K.

## Revendications

1. Procédé pour le cryptage et le décryptage d'une information (I) ; ladite information (I) étant représentée par une suite de symboles (S) ; lesdits symboles (S) étant pris dans un ensemble de symboles appelé ci-après l'alphabet ; ledit procédé étant **caractérisé en ce qu'**il met en oeuvre un générateur pseudo-aléatoire (GA) fournissant une séquence de valeurs dénommée ci-après séquence aléatoire (SA), les valeurs formant ladite séquence aléatoire (SA) étant incluses dans un ensemble ci-après dénommé l'espace des valeurs aléatoires ;
ledit générateur pseudo-aléatoire (GA) pouvant être, avant utilisation et fourniture de ladite séquence aléatoire (SA), initialisé au moyen d'une suite de nombres ci-après dénommée clé d'initialisation (CI) ; ladite clé d'initialisation (CI) déterminant la séquence aléatoire (SA) qui sera fournie par ledit générateur pseudo-aléatoire (GA),
de telle sorte qu'après une initialisation ultérieure utilisant la même clé d'initialisation la séquence de valeurs fournies sera la même qu'après la première initialisation ;
ledit générateur pseudo-aléatoire étant en outre **caractérisé en ce que** la connaissance de ladite séquence des valeurs fournies ne permet pas de retrouver en un temps raisonnable ladite clé d'initialisation ;
ledit procédé comprenant quatre étapes préalables :
- l'étape préalable de séparer en deux parties disjointes ledit alphabet, l'une desdites parties étant ci-après dénommée l'alphabet de contrôle et étant composée de symboles destinés à ne pas être modifiés lors du cryptage, l'autre desdites parties étant ci-après dénommée l'alphabet de message et étant composée de symboles destinés à être éventuellement modifiés lors du cryptage,
de sorte que chacun des symboles utilisés pour représenter l'information est inclus, soit dans ledit alphabet de contrôle, soit dans ledit alphabet de message, aucun symbole n'étant commun à ces deux alphabets,
- l'étape préalable de définir un ensemble, appelé alphabet de masque, formé de tout ou partie des éléments de l'espace des valeurs aléatoires, les valeurs dudit espace des valeurs aléatoires étant des nombres, de sorte que l'alphabet de masque se compose de nombres ;
- l'étape préalable d'effectuer une numérotation de l'alphabet de message, ladite numérotation consistant à attribuer à chaque symbole de l'alphabet de message, sans omission ni répétition, un nombre compris entre 0 et N-1, ci-après dénommé numéro du symbole, N représentant le nombre d'éléments de l'alphabet de message, de sorte que pour tout nombre compris entre 0 et N-1, il y ait un et un seul symbole de l'alphabet de message dont ce nombre soit le numéro ;
- l'étape préalable d'affecter à chaque élément dudit alphabet de masque une permutation dudit alphabet de message ;
Lesdites quatre étapes préalables étant réalisées une fois pour toutes avant la première mise en oeuvre dudit procédé ;
la mise en oeuvre dudit procédé, pour réaliser l'opération de cryptage d'une information (I) à crypter, comprenant les étapes préliminaires suivantes :
- l'étape de prendre en compte une suite de nombres ci-après dénommée la clé primaire de cryptage (CP),
- l'étape de construire ladite clé d'initialisation (CI) à partir de tout ou partie de ladite clé primaire de cryptage (CP) ;
- l'étape d'initialiser ledit générateur pseudo-aléatoire (GA) à l'aide de ladite clé d'initialisation (CI) ;
ledit procédé consistant à sélectionner l'un après l'autre les symboles (S) composant ladite information (I) à crypter, et à crypter chacun des symboles (S) ainsi sélectionnés en lui appliquant les opérations suivantes :
si ledit symbole (S) sélectionné appartient à l'alphabet de contrôle, il n'est pas modifié,
si ledit symbole (S) sélectionné appartient à l'alphabet de message les étapes suivantes sont exécutées :
- l'étape de lire la prochaine valeur de la séquence aléatoire (SA) fournie par ledit générateur pseudo-aléatoire (GA),
- si la valeur lue à l'étape précédente n'est pas un élément dudit alphabet de masque, l'étape de réitérer l'étape précédente jusqu'à obtention d'un élément dudit alphabet de masque,
l'élément dudit alphabet de masque, déterminé à l'étape précédente, sera ci-après dénommé l'élément de masque (M),
- l'étape de sélectionner la permutation de l'alphabet de message affectée audit élément de masque (M) spécifié à l'étape précédente,
- l'étape d'appliquer audit symbole (S) sélectionné la permutation de l'alphabet de message sélectionnée à l'étape précédente,
- l'étape de remplacer ledit symbole (S) sélectionné par le résultat (R) de la permutation mise en oeuvre à l'étape précédente,
ces opérations étant exécutées, on passe au symbole (S) suivant de l'information (I) à crypter, et ainsi de suite jusqu'à ce que tous les symboles de l'information (I) à crypter aient été traités.

2. Procédé selon la revendication 1 ; la mise en oeuvre dudit procédé, pour réaliser l'opération de décryptage d'une information (I) à décrypter, comprenant les mêmes étapes préliminaires que lors du cryptage,
de sorte que le générateur pseudo-aléatoire sera initialisé de la même façon que lors du cryptage et fournira donc la même séquence de valeurs que lors du cryptage ;
ledit procédé consistant à sélectionner l'un après l'autre les symboles (S) composant ladite information (I) à décrypter, et à décrypter chacun des symboles (S) ainsi sélectionnés en lui appliquant les opérations suivantes :
si ledit symbole (S) sélectionné appartient à l'alphabet de contrôle, il n'est pas modifié,
si ledit symbole (S) sélectionné appartient à l'alphabet de message les étapes suivantes sont exécutées :
- l'étape de lire la prochaine valeur de la séquence aléatoire (SA) fournie par ledit générateur pseudo-aléatoire (GA),
- si la valeur lue à l'étape précédente n'est pas un élément dudit alphabet de masque, l'étape de réitérer l'étape précédente jusqu'à obtention d'un élément dudit alphabet de masque,
l'élément dudit alphabet de masque, déterminé à l'étape précédente, sera ci-après dénommé l'élément de masque (M),
- l'étape de sélectionner la permutation inverse de la permutation de l'alphabet de message affectée audit élément de masque (M) spécifié à l'étape précédente,
- l'étape d'appliquer au symbole (S) sélectionné la permutation inverse sélectionnée à l'étape précédente,
- l'étape de remplacer le symbole (S) sélectionné par le résultat (R) de la permutation mise en oeuvre à l'étape précédente,
ces opérations étant exécutées, on passe au symbole (S) suivant de l'information (I) à décrypter, et ainsi de suite jusqu'à ce que tous les symboles de l'information à décrypter aient été traités.

3. Procédé selon la revendication 1 ou 2 ;
ledit procédé étant **caractérisé en ce que** le résultat de la permutation de l'alphabet de message associée à un élément de masque (M) donné, pour un symbole (S) donné appartenant à l'alphabet de message, peut être calculé en exécutant successivement les étapes suivantes :
- l'étape de déterminer le numéro dudit symbole (S) donné,
- l'étape d'ajouter ledit élément de masque (M) donné au numéro déterminé à l'étape précédente,
- l'étape de calculer le reste de la division par N du résultat de l'addition effectuée à l'étape précédente,
- l'étape de déterminer le symbole de l'alphabet de message dont le numéro est le nombre calculé à l'étape précédente, ce symbole étant alors le résultat (R) que l'on souhaitait calculer,
de sorte que la permutation ainsi définie correspond à une addition modulo N sur les numéros de symboles, et que le symbole déterminé à l'étape précédente est alors le résultat de cette permutation appliquée audit symbole donné.

4. Procédé selon la revendication 1 ou 2 ;
ledit procédé étant **caractérisé en ce que** le résultat de la permutation de l'alphabet de message associée à un élément de masque (M) donné, pour un symbole (S) donné appartenant à l'alphabet de message, peut être calculé en exécutant successivement les étapes suivantes :
- l'étape de déterminer le numéro dudit symbole (S) donné,
- l'étape de soustraire ledit élément de masque (M) donné au numéro déterminé à l'étape précédente,
- lorsque le résultat de la soustraction effectuée à l'étape précédente est négatif, l'étape d'ajouter à ce résultat autant de fois que nécessaire le nombre N jusqu'à obtenir un nombre positif,
- l'étape de calculer le reste de la division par N du résultat de l'étape précédente,
- l'étape de déterminer le symbole de l'alphabet de message dont le numéro est le nombre calculé à l'étape précédente, ce symbole étant alors le résultat (R) que l'on souhaitait calculer,
de sorte que la permutation ainsi définie correspond à une soustraction modulo N sur les numéros de symboles, et que le symbole déterminé à l'étape précédente est alors le résultat de cette permutation appliquée audit symbole donné.

5. Procédé selon la revendication 1 ou 2 ;
ledit alphabet de masque ne comprenant que des nombres non nuls et premiers à N ; ledit procédé étant **caractérisé en ce que** le résultat de la permutation de l'alphabet de message associée à un élément de masque (M) donné, pour un symbole (S) donné appartenant à l'alphabet de message, peut être calculé en exécutant successivement les étapes suivantes :
- l'étape de déterminer le numéro dudit symbole (S) donné,
- l'étape de multiplier par l'élément de masque (M) donné le numéro déterminé à l'étape précédente,
- l'étape de calculer le reste de la division par N du résultat de la multiplication effectuée à l'étape précédente,
- l'étape de déterminer le symbole de l'alphabet de message dont le numéro est le nombre calculé à l'étape précédente, ce symbole étant alors le résultat (R) que l'on souhaitait calculer,
de sorte que la permutation ainsi définie correspond à une multiplication modulo N sur les numéros de symboles, et que le symbole déterminé à l'étape précédente est alors le résultat de cette permutation appliquée audit symbole donné.

6. Procédé selon la revendication 1 ou 2 ;
ledit alphabet de masque ne comprenant que des nombres non nuls et premiers à N ; ledit procédé étant **caractérisé en ce que** le résultat de la permutation de l'alphabet de message associée à un élément de masque (M) donné, pour un symbole (S) donné appartenant à l'alphabet de message, peut être calculé en exécutant successivement les étapes suivantes :
- l'étape de déterminer le numéro dudit symbole (S) donné,
- l'étape de déterminer un nombre qui, multiplié par l'élément de masque (M) donné, diffère du numéro déterminé à l'étape précédente, d'un multiple entier de N,
- l'étape de calculer le reste de la division par N du nombre déterminé à l'étape précédente,
- l'étape de déterminer le symbole de l'alphabet de message dont le numéro est le nombre calculé à l'étape précédente, ce symbole étant alors le résultat (R) que l'on souhaitait calculer,
de sorte que la permutation ainsi définie correspond à une division modulo N sur les numéros de symboles, et que le symbole déterminé à l'étape précédente est alors le résultat de cette permutation appliquée audit symbole donné.

7. Procédé selon la revendication 1 ou 2 ;
ledit alphabet de masque ne comprenant que des nombres non nuls et premiers à Phi(N) où Phi(N) désigne le nombre d'entiers compris entre 1 et N-1 et premiers à N ; ledit procédé étant **caractérisé en ce que** le résultat de la permutation de l'alphabet de message associée à un élément de masque (M) donné, pour un symbole (S) donné appartenant à l'alphabet de message, peut être calculé en exécutant successivement les étapes suivantes :
- l'étape de déterminer le numéro dudit symbole (S) donné,
- l'étape de calculer le reste de la division par N du résultat de l'élévation du numéro déterminé à l'étape précédente à une puissance égale à l'élément de masque (M) donné,
- l'étape de déterminer le symbole de l'alphabet de message dont le numéro est le nombre calculé à l'étape précédente, ce symbole étant alors le résultat (R) que l'on souhaitait calculer,
de sorte que la permutation ainsi définie correspond à une exponentiation modulaire sur les numéros de symboles, et que le symbole déterminé à l'étape précédente est alors le résultat de cette permutation appliquée audit symbole donné.

8. Procédé selon la revendication 1 ou 2 ;
ledit alphabet de masque ne comprenant que des nombres non nuls et premiers à Phi(N) où Phi(N) désigne le nombre d'entiers compris entre 1 et N-1 et premiers à N ; ledit procédé étant **caractérisé en ce que** le résultat de la permutation de l'alphabet de message associée à un élément de masque (M) donné, pour un symbole (S) donné appartenant à l'alphabet de message, peut être calculé en exécutant successivement les étapes suivantes :
- l'étape de déterminer le numéro dudit symbole (S) donné,
- l'étape de déterminer un nombre positif, qui, élevé à une puissance égale à l'élément de masque (M) donné, diffère du numéro déterminé à l'étape précédente d'un multiple entier de N,
- l'étape de déterminer le reste de la division par N du nombre déterminé à l'étape précédente,
- l'étape de déterminer le symbole de l'alphabet de message dont le numéro est le nombre calculé à l'étape précédente, ce symbole étant alors le résultat (R) que l'on souhaitait calculer,
de sorte que la permutation ainsi définie correspond à l'extraction d'une racine en arithmétique modulaire sur les numéros de symboles, et que le symbole déterminé à l'étape précédente est alors le résultat de cette permutation appliquée audit symbole donné.

9. Procédé selon la revendication 1 ou 2 ; ledit procédé comprenant une opération préalable supplémentaire consistant à associer à chaque élément de l'alphabet de masque un quadruplet de nombres notés p, q, r et s et tels que le nombre r et le résultat de l'expression p.s-q.r soient tous deux des nombres non nuls et non multiples de N,
ledit procédé étant **caractérisé en ce que** le résultat de la permutation de l'alphabet de message associée à un élément de masque (M) donné, pour un symbole (S) donné appartenant à l'alphabet de message, peut être calculé en exécutant successivement les étapes suivantes :
- l'étape de déterminer le quadruplet de nombres p, q, r et s associé à l'élément de masque (M) donné,
- l'étape de déterminer le numéro du symbole (S) à crypter ou à décrypter, ce numéro étant ci-après noté m,
- l'étape de calculer l'expression m.r + s,
- l'étape, lorsque le résultat du calcul effectué à l'étape précédente est nul ou est un multiple de N, de calculer un nombre k tel que l'expression k.r - p soit un multiple de N
- l'étape, lorsque le résultat du calcul effectué à l'étape précédente n'est ni zéro ni un multiple de N, de calculer un nombre positif k tel que l'expression k.(m.r + s) - (m.p + q) soit un multiple de N ,
- l'étape de calculer le reste de la division par N du nombre k calculé à l'étape précédente,
- l'étape de déterminer le symbole de l'alphabet de masque dont le numéro est le nombre calculé à l'étape précédente, ce symbole étant alors le résultat (R) que l'on souhaitait calculer,
de sorte que la permutation ainsi définie correspond au calcul d'une fonction homographique en arithmétique modulaire sur les numéros de symboles, et que le symbole déterminé à l'étape précédente est alors le résultat de cette permutation appliquée audit symbole donné.

10. Procédé selon l'une quelconque des revendications 1 à 9 ; ledit procédé mettant en oeuvre un premier générateur pseudo-aléatoire (GA1) pouvant être initialisé à l'aide de ladite clé d'initialisation (CI) ;
les valeurs fournies par ledit premier générateur pseudo-aléatoire étant utilisées comme données en entrée d'un algorithme de hachage dont les résultats sont utilisés pour fournir ladite séquence aléatoire (SA) ;
ledit générateur pseudo-aléatoire (GA) consistant en la composition dudit premier générateur pseudo-aléatoire (GA1) et dudit algorithme de hachage.

11. Procédé selon l'une quelconque des revendications 1 à 9 ; ledit procédé comprenant en outre l'étape préliminaire de construire à partir de tout ou partie de ladite clé primaire de cryptage (CP) une suite de nombres appelée ci-après clé secondaire de cryptage (CS) ;
ledit procédé mettant en oeuvre un premier générateur pseudo-aléatoire (GA1) pouvant être initialisé à l'aide de ladite clé d'initialisation (CI), les valeurs fournies par ledit premier générateur pseudo-aléatoire (GA1) étant cryptées à l'aide d'un premier algorithme de cryptage utilisant comme clé de cryptage ladite clé secondaire de cryptage (CS), les résultats dudit premier algorithme de cryptage étant utilisés pour fournir ladite séquence aléatoire (SA) ;
ledit générateur pseudo-aléatoire (GA) consistant en la composition dudit premier générateur pseudo-aléatoire (GA1) et dudit premier algorithme de cryptage.

12. Système pour le cryptage et le décryptage d'une information (I) ; ladite information (I) étant représentée par une suite de symboles (S) ; lesdits symboles (S) étant pris dans un ensemble de symboles appelé ci-après l'alphabet ; ledit alphabet étant séparé en deux parties disjointes, l'une desdites parties étant ci-après dénommée l'alphabet de contrôle et étant composée de symboles destinés à ne pas être modifiés lors du cryptage, l'autre desdites parties étant ci-après dénommée l'alphabet de message et étant composée de symboles destinés à être éventuellement modifiés lors du cryptage ;
ledit système étant tel qu'à tout symbole appartenant audit alphabet de message a été préalablement associé un nombre compris entre 0 et N-1, N désignant le nombre d'élément dudit alphabet de message, le nombre préalablement associé audit symbole étant ci-après appelé le numéro dudit symbole, de sorte que pour tout nombre compris entre 0 et N-1, il y ait un et un seul symbole de l'alphabet de message dont ce nombre soit le numéro ;
ledit système étant plus particulièrement destiné à sécuriser les communications entre un ordinateur ci-après dénommé l'ordinateur client et un réseau formé d'un ou plusieurs autres ordinateurs, ledit système étant intercalé entre ledit ordinateur client et ledit réseau,
de sorte que toute information circulant entre ledit ordinateur client et ledit réseau et devant être cryptée ou décryptée, passe à travers ledit système ;
ledit système comprenant un générateur pseudo-aléatoire (GA) fournissant une séquence de valeurs dénommée ci-après séquence aléatoire (SA), les valeurs formant ladite séquence aléatoire (SA) étant comprises dans un ensemble ci-après dénommé l'espace des valeurs aléatoires ;
les valeurs dudit espace des valeurs aléatoires étant des nombres, certaines de ces valeurs étant incluses dans un sous-ensemble dudit espace des valeurs aléatoires, sous-ensemble ci-après dénommé alphabet de masque ;
ledit générateur pseudo-aléatoire (GA) pouvant être, avant utilisation et fourniture de ladite séquence de valeurs, initialisé au moyen d'une suite de nombres ci-après dénommée clé d'initialisation (CI) ; ladite clé d'initialisation (CI) déterminant la séquence aléatoire (SA) qui sera fournie par le générateur ;
ledit système comprenant en outre :
- deux unités d'entrée sortie (UES), l'une d'entre elles étant destinée à assurer les communications entre ledit système et ledit ordinateur client, l'autre d'entre elles étant destinée à assurer les communications entre ledit système et ledit réseau ;
- des premiers moyens de traitement (TR1) permettant de prendre en compte une suite de nombres ci-après dénommée la clé primaire de cryptage (CP), et de construire ladite clé d'initialisation (CI) à partir de tout ou partie de ladite clé primaire de cryptage (CP),
- des seconds moyens de traitement (TR2) permettant de décider si une valeur appartenant audit espace de valeurs aléatoires appartient audit alphabet de masque,
- des troisièmes moyens de traitement (TR3) permettant de lire les valeurs successives fournies par ledit générateur pseudo-aléatoire, jusqu'à obtenir un élément (M) appartenant audit alphabet de masque,
- des quatrièmes moyens de traitement (TR4) permettant de décider, parmi les symboles (S) transitant à travers ledit système, quels sont les symboles qui doivent être cryptés ou décryptés et quels sont les symboles qui doivent être transmis sans modification,
- des cinquièmes moyens de traitement (TR5) permettant d'associer un nombre à un symbole dudit alphabet de message et permettant en outre d'une part, à partir d'un élément donné de l'alphabet de masque, ci-après appelé l'élément de masque (M), de sélectionner une permutation de l'alphabet de message, cette permutation étant ci-après appelée permutation affectée à l'élément de masque (M), et permettant d'autre part, la permutation affectée à l'élément de masque (M) étant ainsi sélectionnée, et un élément donné de l'alphabet de message (S) étant fourni par l'une des deux dites unités d'entrée sortie, de déterminer le résultat (R) de cette permutation appliquée audit élément donné (S) fourni, et d'envoyer sur l'autre des deux dites unités d'entrée sortie le résultat (R) ainsi déterminé.

13. Système selon la revendication 12 ; lesdits cinquièmes moyens de traitement (TR5) permettant en outre de sélectionner la permutation inverse de ladite permutation affectée à un élément (M) de l'alphabet de masque.

14. Système selon la revendication 12 ou 13 ; lesdits cinquièmes moyens de traitement (TR5) permettant en outre de faire une addition en arithmétique modulaire entre ledit nombre associé à un symbole dudit alphabet de message et un élément (M) dudit alphabet de masque, et d'associer au résultat de cette addition un élément (R) de l'alphabet de message.

15. Système selon la revendication 12 ou 13 ; lesdits cinquièmes moyens de traitement (TR5) permettant en outre de faire une soustraction en arithmétique modulaire entre ledit nombre associé à un symbole dudit alphabet de message et un élément (M) dudit alphabet de masque, et d'associer au résultat de cette soustraction un élément (R) de l'alphabet de message.

16. Système selon la revendication 12 ou 13 ; lesdits cinquièmes moyens de traitement (TR5) permettant en outre de faire une multiplication en arithmétique modulaire entre ledit nombre associé à un symbole dudit alphabet de message et un élément (M) dudit alphabet de masque, et d'associer au résultat de cette multiplication un élément (R) de l'alphabet de message.

17. Système selon la revendication 12 ou 13 ; lesdits cinquièmes moyens de traitement (TR5) permettant en outre de faire une division en arithmétique modulaire entre ledit nombre associé à un symbole dudit alphabet de message et un élément (M) dudit alphabet de masque, et d'associer au résultat de cette division un élément (R) de l'alphabet de message.

18. Système selon la revendication 12 ou 13 ; lesdits cinquièmes moyens de traitement (TR5) permettant en outre de faire une exponentiation en arithmétique modulaire dudit nombre associé à un symbole dudit alphabet de message avec pour exposant un élément (M) dudit alphabet de masque, et d'associer au résultat de cette exponentiation un élément (R) de l'alphabet de message.

19. Système selon la revendication 12 ou 13 ; lesdits cinquièmes moyens de traitement (TR5) permettant en outre de faire une extraction de racine en arithmétique modulaire, et d'associer au résultat de cette extraction de racine un élément (R) de l'alphabet de message.

20. Système selon la revendication 12 ou 13 ; le nombre de symboles composant ledit alphabet de message étant ci-après dénommé N, ledit système comportant en outre des sixièmes moyens de traitement (TR6) permettant d'associer à un élément (M) dudit alphabet de masque un quadruplet de nombres notés p, q, r et s, lesdits cinquièmes moyens de traitement (TR5) permettant en outre :
- d'associer à un symbole dudit alphabet de message, un nombre compris entre 0 et N-1, ce nombre étant ci-après noté m,
- de calculer l'expression m.r + s,
- de déterminer si une expression est nulle ou multiple de N,
- de calculer un nombre k compris entre 0 et N-1 et tel que l'expression k.r - p soit un multiple de N,
- de calculer un nombre k compris entre 0 et N-1 et tel que l'expression k.(m.r + s) - (m.p + q) soit un multiple de N,
- d'associer à un nombre k ainsi calculé un élément (R) de l'alphabet de message.

21. Système selon l'une quelconque des revendications 12 à 20 ; ledit système comprenant un premier générateur pseudo-aléatoire (GA1) pouvant être initialisé à l'aide de ladite clé d'initialisation (CI) et des moyens de calcul (H) permettant d'appliquer un algorithme de hachage aux valeurs fournies par ledit premier générateur pseudo-aléatoire (GA1), les résultats dudit algorithme de hachage étant transmis auxdits seconds et troisièmes moyens de traitement (TR2 , TR3), ledit générateur pseudo-aléatoire (GA) consistant en la réunion dudit premier générateur pseudo-aléatoire (GA1) et desdits moyens de calcul (H) permettant d'appliquer un algorithme de hachage aux valeurs fournies par ledit premier générateur pseudo-aléatoire (GA1).

22. Système selon l'une quelconque des revendications 12 à 20 ; ledit système comprenant un premier générateur pseudo-aléatoire (GA1) pouvant être initialisé à l'aide de ladite clé d'initialisation (CI) ; ledit système comprenant en outre des septièmes moyens de traitement (TR7) permettant de construire à partir de tout ou partie de ladite clé primaire de cryptage (CP) une suite de nombres appelée ci-après clé secondaire de cryptage (CS) ; ledit procédé comprenant en outre des moyens de calcul (K) permettant d'appliquer un algorithme de cryptage, utilisant comme clé de cryptage ladite clé secondaire de cryptage (CS), ledit algorithme de cryptage étant appliqué aux valeurs fournies par ledit premier générateur pseudo-aléatoire (GA1), les résultats dudit algorithme de cryptage étant transmis auxdits seconds et troisièmes moyens de traitement (TR2 , TR3), ledit générateur pseudo-aléatoire (GA) consistant en la réunion dudit premier générateur pseudo-aléatoire (GA1) et desdits moyens de calcul (K) permettant d'appliquer un algorithme de cryptage aux valeurs fournies par ledit premier générateur pseudo-aléatoire (GA1).

## Claims

1. Method for encrypting and decrypting a piece of information (I), said information (I) being represented by a string of symbols (S), said symbols (S) being included in a set of symbols hereinafter called the alphabet, said method being **characterized in that** it implements a pseudo-random generator (GA) that provides a sequence of values hereinafter called a random sequence (SA), the values forming said random sequence (SA) being included in a set hereinafter called the random value space;
said pseudo-random generator (GA) being able to be initialized, prior to utilization and the provision of said random sequence (SA), by means of a string of numbers hereinafter called the initialization key (Cl), said initialization key (Cl) determining the random sequence (SA) that will be provided by said pseudo-random generator (GA),
so that after a subsequent initialization using the same initialization key, the sequence of values provided will be the same as it was after the first initialization ;
said pseudo-random generator also being **characterized in that** the knowledge of said sequence of values provided does not make it possible to discover said initialization key within a reasonable amount of time;
said method comprising four preliminary steps:
- the preliminary step of dividing said alphabet into two separate parts, one of said parts hereinafter being called the control alphabet and being composed of symbols designated not to be modified during encryption, the other of said parts hereinafter being called the message alphabet and being composed of symbols designated to be potentially modified during encryption,
so that each of the symbols used to represent the information is included in either said control alphabet or said message alphabet, there being no symbol common to these two alphabets,
- the preliminary step of defining a set, called the mask alphabet, formed of all or some of the elements in the random value space, the values in said random value space being numbers, so that the mask alphabet is composed of numbers;
- the preliminary step of performing a numbering of the message alphabet, said numbering consisting of assigning to each symbol of the message alphabet, with no omission or repetition, a number between 0 and N-1, hereinafter called the number of the symbol, N representing the number of elements in the message alphabet, so that for any number between 0 and N-1, there is one and only one symbol of the message alphabet whose number is this number;
- the preliminary step of assigning a permutation of said message alphabet to each element of said mask alphabet;
Said four preliminary steps being performed once and for all prior to the first implementation of said method;
the implementation of said method, in order to perform the operation of encrypting a piece of information (I) to be encrypted, comprising the following preliminary steps:
- the step of acquiring a string of numbers, hereinafter called the primary encryption key (CP),
- the step of constructing said initialization key (CI) from all or part of said primary encryption key (CP),
- the step of initializing said pseudo-random generator (GA) using said initialization key (Cl) ;
said method consisting of selecting, one after another, the symbols (S) composing said information (I) to be encrypted, and of encrypting each of the symbols (S) thus selected by applying the following operations to it:
if said selected symbol (S) belongs to the control alphabet, it is not modified;
if said selected symbol (S) belongs to the message alphabet, the following steps are executed:
- the step of reading the next value in the random sequence (SA) provided by said pseudo-random generator (GA),
- if the value read in the preceding step is not an element of said mask alphabet, the step of reiterating the preceding step until an element of said mask alphabet is obtained,
the element of said mask alphabet determined in the preceding step will hereinafter be called the mask element (M),
- the step of selecting the permutation of the message alphabet assigned to the mask element (M) specified in the preceding step,
- the step of applying the permutation of the message alphabet selected in the preceding step to said selected symbol (S),
- the step of replacing said selected symbol (S) with the result (R) of the permutation performed in the preceding step;
these operations having been executed, the method moves on to the next symbol (S) in the information (I) to be encrypted, and so on, until all of the symbols in the information (I) to be encrypted have been processed.

2. Method according to claim 1, the implementation of said method, in order to perform the operation of decrypting a piece of information (I) to be decrypted, comprising the same preliminary steps as during the encryption,
so that the pseudo-random generator is initialized in the same way as during the encryption and therefore provides the same sequence of values as during the encryption;
said method consisting of selecting, one after another, the symbols (S) composing said information (I) to be decrypted, and of decrypting each of the symbols (S) thus selected by applying the following operations to it:
if said selected symbol (S) belongs to the control alphabet, it is not modified;
if said selected symbol (S) belongs to the message alphabet, the following steps are executed:
- the step of reading the next value in the random sequence (SA) provided by said pseudo-random generator (GA),
- if the value read in the preceding step is not an element of said mask alphabet, the step of reiterating the preceding step until an element of said mask alphabet is obtained,
the element of said mask alphabet determined in the preceding step will hereinafter be called the mask element (M),
- the step of selecting the inverse permutation of the permutation of the message alphabet assigned to said mask element (M) specified in the preceding step,
- the step of applying the inverse permutation selected in the preceding step to the selected symbol (S),
- the step of replacing the selected symbol (S) with the result (R) of the permutation performed in the preceding step;
these operations having been executed, the method moves on to the next symbol (S) in the information (I) to be decrypted, and so on, until all of the symbols in the information to be decrypted have been processed.

3. Method according to claim 1 or 2;
said method being **characterized in that** the result of the permutation of the message alphabet associated with a given mask element (M), for a given symbol (S) belonging to the message alphabet, can be calculated by successively executing the following steps:
- the step of determining the number of said given symbol (S),
- the step of adding said given mask element (M) to the number determined in the preceding step,
- the step of calculating the remainder of the division by N of the result of the addition performed in the preceding step,
- the step of determining the symbol of the message alphabet whose number is the number calculated in the preceding step, this symbol being the result (R) that was meant to be calculated,
hence, the permutation thus defined corresponds to a modulo-N addition on the symbol numbers, and the symbol determined in the preceding step is the result of this permutation applied to said given symbol.

4. Method according to claim 1 or 2;
said method being **characterized in that** the result of the permutation of the message alphabet associated with a given mask element (M), for a given symbol (S) belonging to the message alphabet, can be calculated by successively executing the following steps:
- the step of determining the number of said given symbol (S),
- the step of subtracting said given mask element (M) from the number determined in the preceding step,
- when the result of the subtraction performed in the preceding step is negative, the step of adding the number N to this result as many times as necessary to obtain a positive number,
- the step of calculating the remainder of the division by N of the result of the preceding step,
- the step of determining the symbol of the message alphabet whose number is the number calculated in the preceding step, this symbol being the result (R) that was meant to be calculated,
hence, the permutation thus defined corresponds to a modulo-N subtraction on the symbol numbers, and the symbol determined in the preceding step is the result of this permutation applied to said given symbol.

5. Method according to claim 1 or 2;
said mask alphabet including only non-zero numbers that are prime to N; said method being **characterized in that** the result of the permutation of the message alphabet associated with a given mask element (M), for a given symbol (S) belonging to the message alphabet, can be calculated by successively executing the following steps:
- the step of determining the number of said given symbol (S),
- the step of multiplying the number determined in the preceding step by the given mask element (M),
- the step of calculating the remainder of the division by N of the result of the multiplication performed in the preceding step,
- the step of determining the symbol of the message alphabet whose number is the number calculated in the preceding step, this symbol being the result (R) that was meant to be calculated,
hence, the permutation thus defined corresponds to a modulo-N multiplication on the symbol numbers, and the symbol determined in the preceding step is the result of this permutation applied to said given symbol.

6. Method according to claim 1 or 2;
said mask alphabet including only non-zero numbers that are prime to N; said method being **characterized in that** the result of the permutation of the message alphabet associated with a given mask element (M), for a given symbol (S) belonging to the message alphabet, can be calculated by successively executing the following steps:
- the step of determining the number of said given symbol (S),
- the step of determining a number which, when multiplied by the given mask element (M), differs from the number determined in the preceding step by a whole multiple of N,
- the step of calculating the remainder of the division by N of the number determined in the preceding step,
- the step of determining the symbol of the message alphabet whose number is the number calculated in the preceding step, this symbol being the result that was meant to be calculated,
hence, the permutation thus defined corresponds to a modulo-N division on the symbol numbers, and the symbol determined in the preceding step is the result of this permutation applied to said given symbol.

7. Method according to claim 1 or 2;
said mask alphabet including only non-zero numbers that are prime to Phi (N), where Phi (N) designates the number of integers between 1 and N-1 that are prime to N; said method being **characterized in that** the result of the permutation of the message alphabet associated with a given mask element (M), for a given symbol (S) belonging to the message alphabet, can be calculated by successively executing the following steps:
- the step of determining the number of said given symbol (S),
- the step of calculating the remainder of the division by N of the result of the raising of the number determined in the preceding step to a power equal to the given mask element (M),
- the step of determining the symbol of the message alphabet whose number is the number calculated in the preceding step, this symbol being the result (R) that was meant to be calculated,
hence, the permutation thus defined corresponds to a modular exponentiation on the symbol numbers, and the symbol determined in the preceding step is the result of this permutation applied to said given symbol.

8. Method according to claim 1 or 2;
said mask alphabet including only non-zero numbers that are prime to Phi (N), where Phi (N) designates the number of integers between 1 and N-1 that are prime to N; said method being **characterized in that** the result of the permutation of the message alphabet associated with a given mask element (M), for a given symbol (S) belonging to the message alphabet, can be calculated by successively executing the following steps:
- the step of determining the number of said given symbol (S),
- the step of determining a positive number which, when raised to a power equal to the given mask element (M), differs from the number determined in the preceding step by a whole multiple of N,
- the step of determining the remainder of the division by N of the number determined in the preceding step,
- the step of determining the symbol of the message alphabet whose number is the number calculated in the preceding step, this symbol being the result (R) that was meant to be calculated,
hence, the permutation thus defined corresponds to a root extraction in modular arithmetic on the symbol numbers, and the symbol determined in the preceding step is the result of this permutation applied to said given symbol.

9. Method according to claim 1 or 2, said method including an additional preliminary operation that consists of associating each element of the mask alphabet with a quadruplet of numbers noted p, q, r and s such that the number r and the result of the expression p.s-q.r are both non-zero numbers that are not multiples of N,
said method being **characterized in that** the result of the permutation of the message alphabet associated with a given mask element (M), for a given symbol (S) belonging to the message alphabet, can be calculated by successively executing the following steps:
- the step of determining the quadruplet of numbers p, q, r and s associated with the given mask element (M),
- the step of determining the number of the symbol (S) to be encrypted or decrypted, this number hereinafter being noted m,
- the step of calculating the expression m.r + s,
- the step, when the result of the calculation performed in the preceding step is zero or is a multiple of N, of calculating a number k such that the expression k.r - p is a multiple of N,
- the step, when the result of the calculation performed in the preceding step is neither zero nor a multiple of N, of calculating a positive number k such that the expression k.(m.r + s) - (m.p + q) is a multiple of N,
- the step of calculating the remainder of the division by N of the number k calculated in the preceding step,
- the step of determining the symbol of the mask alphabet whose number is the number calculated in the preceding step, this symbol being the result that was meant to be calculated,
hence, the permutation thus defined corresponds to the calculation of a homographic function in modular arithmetic on the symbol numbers, and the symbol determined in the preceding step is the result of this permutation applied to said given symbol.

10. Method according to any of claims 1 through 9, said method implementing a first pseudo-random generator (GA1) that can be initialized using the Initialization key. (CI);
the values provided by said first pseudo-random generator being used as input data in a hash algorithm whose results are used to provide said random sequence (SA) ;
said pseudo-random generator (GA) consisting in the composition of said first pseudo-random generator (GA1) and said hash algorithm.

11. Method according to any of claims 1 through 9, said method also including the preliminary step of constructing, from all or part of said primary encryption key (CP), a string of numbers hereinafter called the secondary encryption key (CS);
said method implementing a first pseudo-random generator (GA1) that can be initialized using said initialization key (Cl), the values provided by said first pseudo-random generator (GA1) being encrypted by means of a first encryption algorithm using the secondary encryption key (CS) as the encryption key, the results of said first encryption algorithm being used to provide said random sequence (SA);
said pseudo-random generator (GA) consisting in the composition of said first pseudo-random generator (GA1) and said first encryption algorithm.

12. System for encrypting and decrypting a piece of information (I), said information (I) being represented by a string of symbols (S), said symbols (S) being included in a set of symbols hereinafter called the alphabet; said alphabet being divided into two separate parts, one of said parts hereinafter being called the control alphabet and being composed of symbols designated not to be modified during encryption; the other of said parts hereinafter being called the message alphabet and being composed of symbols designated to be potentially modified during encryption;
said system being such that each symbol belonging to said message alphabet has been previously associated with a number between 0 and N-1, N designating the number of elements in said message alphabet, the number previously associated with said symbol hereinafter being called the number of said symbol, so that for any number between 0 and N-1, there is one and only one symbol of the message alphabet whose number is this number;
said system being more particularly dedicated to securing communications between a computer, hereinafter called the client computer, and a network formed of one or more other computers, said system being interposed between said client computer and said network,
so that any information running between said client computer and said network that must be encrypted or decrypted passes through said system;
said system comprising a pseudo-random generator (GA) that provides a sequence of values, hereafter called a random sequence (SA), the values forming said random sequence (SA) being included in a set hereinafter called the random value space;
the values in said random value space being numbers, some of these values being included in a subset of said random value space, a subset hereinafter called the mask alphabet ;
said pseudo-random generator (GA) being able to be initialized, prior to utilization and the provision of said sequence of values, by means of a string of numbers hereinafter called the initialization key (Cl); said initialization key (Cl) determining the random sequence (SA) that will be provided by the generator;
said system also comprising :
- two input-output units (UES), one of which is dedicated to handling the communications between said system and said client computer, the other of which is dedicated to handling the communications between said system and said network;
- first processing means (TR1) that make it possible to acquire a string of numbers, hereinafter called the primary encryption key (CP), and to construct said initialization key (CI) from all or part of said primary encryption key (CP),
- second processing means (TR2) that make it possible to decide whether a value belonging to said random value space belongs to said mask alphabet,
- third processing means (TR3) that make it possible to read the successive values provided by said pseudo-random generator until an element (M) belonging to the mask alphabet is obtained,
- fourth processing means (TR4) that make it possible to decide which of the symbols (S) passing through said system are the symbols that must be encrypted or decrypted, and which are the symbols that must be transmitted without being modified,
- fifth processing means (TR5) that make it possible to associate a number with a symbol of said message alphabet, and that make it possible to select, from a given element of the mask alphabet hereinafter called the mask element (M), a permutation of the message alphabet, this permutation hereinafter being called the permutation assigned to the mask element (M), and that also make it possible, once the permutation assigned to the mask element (M) has been thus selected and a given element of the message alphabet (S) has been provided by one of said two input-output units, to determine the result (R) of this permutation applied to said given element (S) provided, and to send the result (R) thus determined to the other of said two input-output units.

13. System according to claim 12, said fifth processing means (TR5) also making it possible to select the inverse permutation of said permutation assigned to an element (M) of the mask alphabet.

14. System according to claim 12 or 13; said fifth processing means (TR5) also making it possible to perform an addition in modular arithmetic between said number associated with a symbol of said message alphabet and an element (M) of said mask alphabet, and to associate the result of this addition with an element (R) of the message alphabet.

15. System according to claim 12 or 13; said fifth processing means (TR5) also making it possible to perform a subtraction in modular arithmetic between said number associated with a symbol of said message alphabet and an element (M) of said mask alphabet, and to associate the result of this subtraction with an element (R) of the message alphabet.

16. System according to claim 12 or 13; said fifth processing means (TR5) also making it possible to perform a multiplication in modular arithmetic between said number associated with a symbol of said message alphabet and an element (M) of said mask alphabet, and to associate the result of this multiplication with an element (R) of the message alphabet.

17. System according to claim 12 or 13; said fifth processing means (TR5) also making it possible to perform a division in modular arithmetic between said number associated with a symbol of said message alphabet and an element (M) of said mask alphabet, and to associate the result of this division with an element (R) of the message alphabet.

18. System according to claim 12 or 13; said fifth processing means (TR5) also making it possible to perform an exponentiation in modular arithmetic of said number associated with a symbol of said message alphabet, with an element (M) of said mask alphabet as the exponent, and to associate the result of this exponentiation with an element (R) of the message alphabet.

19. System according to claim 12 or 13; said fifth processing means (TR5) also making it possible to perform a root extraction in modular arithmetic, and to associate the result of this root extraction with an element (R) of the message alphabet.

20. System according to claim 12 or 13, the number of symbols composing said message alphabet hereinafter being noted N, said system also including sixth processing means (TR6) that make it possible to associate an element (M) of said mask alphabet with a quadruplet of numbers noted p, q, r and s, said fifth processing means (TR5) also making it possible:
- to associate a symbol of said message alphabet with a number between 0 and N-1, this number hereinafter being noted m,
- to calculate the expression m.r + s,
- to determine whether an expression is zero or a multiple of N,
- to calculate a number k between 0 and N-1 such that the expression k.r
- p is a multiple of N,
- to calculate a number k between 0 and N-1 such that the expression k.(m-r + s) - (m.p + q) is a multiple of N,
- to associate a number k thus calculated with an element (R) of the message alphabet.

21. System according to any of claims 12 through 20, said system including a first pseudo-random generator (GA1) that can be initialized using said initialization key (Cl) and calculating means (H) that make it possible to apply a hash algorithm to the values provided by said first pseudo-random generator (GA1), the results of said hash algorithm being transmitted to said second and third processing means (TR2, TR3), said pseudo-random generator (GA) consisting in the combination of said first pseudo-random generator (GA1) and said calculating means (H) that make it possible to apply a hash algorithm to the values provided by said first pseudo-random generator (GA1).

22. System according to any of claims 12 through 20, said system including a first pseudo-random generator (GA1) that can be initialized using said initialization key (Cl), said system also including seventh processing means (TR7) that make it possible to construct, from all or part of said primary encryption key (CP), a string of numbers hereinafter called the secondary encryption key (CS); said method also including calculating means (K) that make it possible to apply an encryption algorithm, using said secondary encryption key (CS) as the encryption key, said encryption algorithm being applied to the values provided by said first pseudo-random generator (GA1), the results of said encryption algorithm being transmitted to said second and third processing means (TR2, TR3), said pseudo-random generator (GA) consisting in the combination of said first pseudo-random generator (GA1) and said calculating means (K) that make it possible to apply an encryption algorithm to the values provided by said first pseudo-random generator (GA1).

## Patentansprüche

1. Verfahren zum Verschlüsseln und Entschlüsseln einer Information (I); die besagte Information (1) ist dabei durch eine Folge von Symbolen (S) dargestellt; die besagten Symbole (S) sind dabei einer Reihe von Symbolen entnommen, die nachfolgend das Alphabet genannt wird; das besagte Verfahren ist **dadurch gekennzeichnet, dass** es einen Pseudo-Zufallsgenerator (GA) verwendet, der eine Folge von Werten liefert, die nachfolgend Zufallssequenz (SA) genannt wird, wobei die Werte, die die besagte Zufallssequenz (SA) bilden, in einer Einheit enthalten sind, die nachfolgend Raum der Zufallswerte genannt wird;
der besagte Pseudo-Zufallsgenerator (GA) kann dabei vor seiner Verwendung und vor der Lieferung der besagten Zufallssequenz (SA) anhand einer Reihe von Zahlen initialisiert werden, die nachfolgend Initialisierungsschlüssel (Cl) genannt wird; der besagte Initialisierungsschlüssel (Cl) bestimmt dabei die Zufallssequenz (SA), die vom besagten Pseudo-Zufallsgenerator (GA) geliefert wird,
sodass die Folge von Werten nach einer späteren Initialisierung unter Verwendung desselben Initialisierungsschlüssels dieselbe sein wird, wie nach der ersten Initialisierung;
der besagte Pseudo-Zufallsgenerator ist dabei darüber hinaus **dadurch gekennzeichnet, dass** selbst wenn man die besagte Folge von gelieferten Werte kennt, es innerhalb einer vernünftigen Zeit unmöglich ist, den besagten Initialisierungsschlüssel zu finden;
das besagte Verfahren enthält vier vorrangige Schritte:
den vorrangigen Schritt zur Auftrennung des besagten Alphabets in zwei getrennte Abschnitte, wobei einer der beiden Abschnitte nachfolgend das Kontrollalphabet genannt wird und aus Symbolen besteht, die bei der Verschlüsselung nicht verändert werden, und der andere der beiden besagten Abschnitte nachfolgend Meldungsalphabet genannt wird und aus Symbolen besteht, die bei der Verschlüsselung eventuell verändert werden,
sodass jedes der zur Darstellung der Information verwendeten Symbole entweder im besagten Kontrollalphabet, oder im besagten Meldungsalphabet enthalten ist, wobei diese beiden Alphabete kein gemeinsames Symbol aufweisen,
- den vorrangigen Schritt zur Definition einer Einheit, die Maskenalphabet genannt wird, und aus allen oder einem Teil der Elemente des Raumes der Zufallswerte gebildet wird, wobei die Werte des besagten Raumes der Zufallswerte Zahlen sind, sodass sich das Maskenalphabet aus Zahlen zusammensetzt;
- den vorrangigen Schritt zur Durchführung einer Nummerierung des Meldungsalphabets, wobei die besagte Nummerierung darin besteht, jedem Symbol des Meldungsalphabets ohne Auslassung oder Wiederholung eine Zahl zwischen 0 und N-1 zuzuordnen, die nachfolgend die Symbolnummer genannt wird, wobei N die Anzahl der Elemente des Meldungsalphabets darstellt, sodass es für jede Zahl zwischen 0 und N-1 nur ein einziges Symbol aus dem Meldungsalphabet gibt, dem diese Zahl als Nummer zugeordnet ist;
- den vorrangigen Schritt der Zuweisung einer Permutation des besagten Meldungsalphabets zu jedem Element des besagten Maskenalphabets ;
Die besagten vier vorrangigen Schritte werden ein einziges Mal vor der ersten Anwendung des besagten Verfahrens ausgeführt;
Die Anwendung des besagten Verfahrens zur Durchführung der Verschlüsselungsoperation einer zu verschlüsselnden Information (I) enthält die folgenden vorbereitenden Schritte:
- den Schritt der Berücksichtigung einer Reihe von Zahlen, die nachfolgend Primärverschlüsselungscode (CP) genannt wird,
- den Schritt des Aufbaus des besagten Initialisierungsschlüssels (CI) basierend auf dem gesamten oder einem Teil des besagten Primärverschlüsselungscodes (CP);
- den Schritt der Initialisierung des besagten Pseudo-Zufallsgenerators (GA) mithilfe des besagten Initialisierungsschlüssels (CI);
das besagte Verfahren besteht dabei darin, die Symbole (S), aus denen die besagte zu verschlüsselnde Information (I) gebildet wird, nacheinander auszuwählen, und alle so ausgewählten Symbole (S) zu verschlüsseln, indem man die folgenden Operationen anwendet:
wenn das besagte ausgewählte Symbol (S) zum Kontrollalphabet gehört, wird es nicht verändert,
wenn das besagte ausgewählte Symbol (S) zum Meldungsalphabet gehört, werden die folgenden Schritte ausgeführt:
den Schritt des Lesens des nächsten Wertes der Zufallssequenz (SA), die vom besagten Pseudo-Zufallsgenerator (GA) geliefert wird,
- wenn der im vorherigen Schritt gelesene Wert kein Element des besagten Maskenalphabets ist, wird der vorherige Schritt bis zum Erhalt eines Elements des besagten Maskenalphabets wiederholt,
das Element des besagten Maskenalphabets, das im vorherigen Schritt bestimmt wird, wird nachfolgend das Maskenelement (M) genannt,
- den Schritt der Auswahl der Permutation des Meldungsalphabets, die dem besagten Maskenelement (M) zugeordnet wird, das im vorherigen Schritt bestimmt wurde,
- den Schritt der Anwendung der im vorherigen Schritt ausgewählten Permutation des Meldungsalphabets auf das besagte ausgewählte Symbol (S),
- den Schritt des Ersetzens des besagten ausgewählten Symbols (S) durch das Ergebnis (R) der im vorherigen Schritt angewandten Permutation,
wenn diese Operationen ausgeführt sind, geht man zum nächsten Symbol (S) der zu verschlüsselnden Information (I) über, und so weiter, bis alle Symbole der zu verschlüsselnden Information (I) behandelt worden sind.

2. Verfahren nach Anspruch 1; wobei die Umsetzung des besagten Verfahrens zur Durchführung der Entschlüsselungsoperation einer zu entschlüsselnden Information (1) dieselben vorrangigen Schritte wie beim Verschlüsseln enthält;
sodass der Pseudo-Zufallsgenerator auf dieselbe Art und Weise initialisiert wird, wie beim Verschlüsseln, und somit auch dieselbe Folge von Werten liefert, wie beim Verschlüsseln;
das besagte Verfahren besteht dabei darin, nacheinander die Symbole (S) auszuwählen, aus denen die besagte und zu entschlüsselnde Information (I) besteht, und jedes der so ausgewählten Symbole (S) zu entschlüsseln, indem man die folgenden Operationen anwendet:
wenn das besagte ausgewählte Symbol (S) zum Kontrollalphabet gehört, wird es nicht verändert,
wenn das besagte ausgewählte Symbol (S) zum Meldungsalphabet gehört, werden die folgenden Schritte ausgeführt:
- der Schritt des Lesens des nächsten Wertes der Zufallssequenz (SA), die vom besagten Pseudo-Zufallsgenerator (GA) geliefert wird,
- wenn der im vorherigen Schritt gelesene Wert kein Element des besagten Maskenalphabets ist, wird der vorherige Schritt bis zum Erhalt eines Elements des besagten Maskenalphabets wiederholt,
das Element des besagten Maskenalphabets, das im vorherigen Schritt bestimmt wird, wird nachfolgend das Maskenelement (M) genannt,
- der Schritt der Auswahl der umgekehrten Permutation der Permutation des Meldungsalphabets, die dem besagten Maskenelement (M) zugeordnet wird, das im vorherigen Schritt bestimmt wird,
- der Schritt der Anwendung der im vorherigen Schritt ausgewählten umgekehrten Permutation des Meldungsalphabets auf das besagte ausgewählte Symbol (S),
- der Schritt des Ersetzens des besagten ausgewählten Symbols (S) durch das Ergebnis (R) der im vorherigen Schritt angewandten Permutation,
wenn diese Operationen ausgeführt sind, geht man zum nächsten Symbol (S) der zu entschlüsselnden Information (1) über, und so weiter, bis alle Symbole der zu entschlüsselnden Information (1) behandelt worden sind.

3. Verfahren nach Anspruch 1 oder 2;
das besagte Verfahren ist dabei **dadurch gekennzeichnet, dass** das Ergebnis der Permutation des Meldungsalphabets, die einem gegebenen Maskenelement (M) für ein gegebenes Symbol (S) des Meldungsalphabets zugeordnet wird, errechnet werden kann, indem man nacheinander die folgenden Schritte ausführt:
- den Schritt zur Festlegung der Nummer des besagten gegebenen Symbols (S),
- den Schritt des Hinzufügens des besagten gegebenen Maskenelements (M) zur im vorigen Schritt festgelegten Nummer,
- den Schritt der Berechnung des Rests der Division durch N des Ergebnisses der im vorherigen Schritt ausgeführten Addition,
- den Schritt der Festlegung des Symbols des Meldungsalphabets, dessen Nummer die im vorherigen Schritt berechnete Zahl ist, wobei dieses Symbol somit das Ergebnis (R) ist, das man errechnen wollte,
sodass die so definierte Permutation einer Addition modulo N der Symbolnummern entspricht, und dass das im vorherigen Schritt bestimmte Symbol somit das Ergebnis dieser Permutation ist, die auf das gegebene Symbol angewandt wird.

4. Verfahren nach Anspruch 1 oder 2;
das besagte Verfahren ist dabei **dadurch gekennzeichnet, dass** das Ergebnis der Permutation des Meldungsalphabets, die einem gegebenen Maskenelement (M) für ein gegebenes Symbol (S) aus dem Meldungsalphabet zugeordnet wird, berechnet werden kann, indem man nacheinander folgende Schritte ausführt:
- den Schritt zur Festlegung der Nummer des besagten gegebenen Symbols (S),
- den Schritt der Subtraktion des besagten gegebenen Maskenelements (M) von der im vorigen Schritt festgelegten Nummer,
- wenn das Ergebnis der im vorherigen Schritt durchgeführten Subtraktion negativ ist, den Schritt, zu diesem Ergebnis die Zahl N sooft wie nötig zuzuzählen, bis eine positive Zahl entsteht,
- den Schritt der Berechnung des Rests der Division durch N des Ergebnisses des vorherigen Schritts,
- den Schritt der Festlegung des Symbols des Meldungsalphabets, dessen Nummer die im vorherigen Schritt berechnete Zahl ist, wobei dieses Symbol somit das Ergebnis (R) ist, das man errechnen wollte,
sodass die so definierte Permutation einer Subtraktion modulo N der Nummern der Symbole entspricht, und dass das im vorherigen Schritt bestimmte Symbol somit das Ergebnis dieser Permutation ist, die auf das gegebene Symbol angewandt wird.

5. Verfahren nach Anspruch 1 oder 2;
das besagte Maskenalphabet enthält dabei nur Zahlen ungleich Null und Primzahlen bis N; das besagte Verfahren ist dabei **dadurch gekennzeichnet, dass** das Ergebnis der Permutation des Meldungsalphabets, die einem gegebenen Maskenelement (M) für ein gegebenes Symbol (S) aus dem Meldungsalphabet zugeordnet wird, errechnet werden kann, indem man nacheinander die folgenden Schritte ausführt:
- den Schritt zur Festlegung der Nummer des besagten gegebenen Symbols (S),
- den Schritt der Multiplikation mit dem gegebenen Maskenelement (M) der im vorigen Schritt festgelegten Nummer,
- den Schritt der Berechnung des Rests der Division durch N des Ergebnisses der im vorherigen Schritt ausgeführten Multiplikation,
- den Schritt der Festlegung des Symbols des Meldungsalphabets, dessen Nummer die im vorherigen Schritt berechnete Zahl ist, wobei dieses Symbol somit das Ergebnis (R) ist, das man errechnen wollte,
sodass die so definierte Permutation einer Multiplikation modulo N der Symbolnummern entspricht, und dass das im vorherigen Schritt bestimmte Symbol somit das Ergebnis dieser Permutation ist, die auf das gegebene Symbol angewandt wird.

6. Verfahren nach Anspruch 1 oder 2;
das besagte Maskenalphabet enthält dabei nur Zahlen ungleich Null und Primzahlen bis N; das besagte Verfahren ist dabei **dadurch gekennzeichnet, dass** das Ergebnis der Permutation des Meldungsalphabets, die einem gegebenen Maskenelement (M) für ein gegebenes Symbol (S) aus dem Meldungsalphabet zugeordnet wird, errechnet werden kann, indem man nacheinander die folgenden Schritte ausführt:
- den Schritt zur Festlegung der Nummer des besagten gegebenen Symbols (S),
- den Schritt zur Festlegung einer Zahl, die, multipliziert mit dem gegebenen Maskenelement (M) um ein ganzes Vielfaches von N von der im vorigen Schritt festgelegten Nummer abweicht,
- den Schritt der Berechnung des Rests der Division durch N der im vorherigen Schritt festgelegten Zahl,
- den Schritt der Festlegung des Symbols des Meldungsalphabets, dessen Nummer die im vorherigen Schritt berechnete Zahl ist, wobei dieses Symbol somit das Ergebnis (R) ist, das man errechnen wollte,
sodass die so definierte Permutation einer Division modulo N der Symbolnummern entspricht, und dass das im vorherigen Schritt bestimmte Symbol somit das Ergebnis dieser Permutation ist, die auf das gegebene Symbol angewandt wird.

7. Verfahren nach Anspruch 1 oder 2;
das besagte Maskenalphabet enthält dabei nur Zahlen ungleich Null und Primzahlen bis Phi (N), wobei Phi (N) ganze Zahlen zwischen 1 und N-1 und Primzahlen bis N bezeichnet; das besagte Verfahren ist dabei **dadurch gekennzeichnet, dass** das Ergebnis der Permutation des Meldungsalphabets, die einem gegebenen Maskenelement (M) für ein gegebenes Symbol (S) aus dem Meldungsalphabet zugeordnet wird, errechnet werden kann, indem man nacheinander die folgenden Schritte ausführt:
- den Schritt zur Festlegung der Nummer des besagten gegebenen Symbols (S),
- den Schritt der Berechnung des Rests der Division durch N des Ergebnisses der Potenzierung der im vorherigen Schritt festgelegten Zahl um einen Wert gleich dem gegebenen Maskenelement (M),
- den Schritt der Festlegung des Symbols des Meldungsalphabets, dessen Nummer die im vorherigen Schritt berechnete Zahl ist, wobei dieses Symbol somit das Ergebnis (R) ist, das man errechnen wollte,
sodass die so definierte Permutation einer modularen Exponentierung der Symbolnummern entspricht, und dass das im vorherigen Schritt bestimmte Symbol somit das Ergebnis dieser Permutation ist, die auf das gegebene Symbol angewandt wird.

8. Verfahren nach Anspruch 1 oder 2;
das besagte Maskenalphabet enthält dabei nur Ziffern ungleich Null und Primzahlen bis Phi (N), wobei Phi (N) ganze Zahlen zwischen 1 und N-1 und Primzahlen bis N bezeichnet; das besagte Verfahren ist dabei **dadurch gekennzeichnet, dass** das Ergebnis der Permutation des Meldungsalphabets, die einem gegebenen Maskenelement (M) für ein gegebenes Symbol (S) aus dem Meldungsalphabet zugeordnet wird, errechnet werden kann, indem man nacheinander die folgenden Schritte ausführt:
- den Schritt zur Festlegung der Nummer des besagten gegebenen Symbols (S),
- den Schritt zur Festlegung einer positiven Zahl, die, erhöht um eine Potenz gleich dem gegebenen Maskenelement (M) von der im vorherigen Schritt festgelegten Zahl um ein ganzes Vielfaches von N abweicht,
- den Schritt der Festlegung des Rests der Division durch N der im vorherigen Schritt festgelegten Zahl,
- den Schritt der Festlegung des Symbols des Meldungsalphabets, dessen Nummer die im vorherigen Schritt berechnete Zahl ist, wobei dieses Symbol somit das Ergebnis (R) ist, das man errechnen wollte,
sodass die so definierte Permutation einer modularen Wurzel der Symbolnummern entspricht, und dass das im vorherigen Schritt bestimmte Symbol somit das Ergebnis dieser Permutation ist, die auf das gegebene Symbol angewandt wird.

9. Verfahren nach Anspruch 1 oder 2;
das besagte Verfahren enthält dabei eine zusätzliche vorrangige Operation, die darin besteht, jedem Element des Maskenalphabets eine Vierergruppe an Zahlen p, q, r, s zuzuordnen, so dass die Zahl r und das Ergebnis der Formel p.s-q.r jeweils Zahlen ungleich Null und keine Vielfachen von N sind,
wobei das Verfahren **dadurch gekennzeichnet ist, dass** das Ergebnis der Permutation des Meldungsalphabets, die einem gegebenen Maskenelement (M) für ein gegebenes Symbol (S) aus dem Meldungsalphabet zugeordnet wird, errechnet werden kann, indem man nacheinander die folgenden Schritte ausführt:
- den Schritt zur Festlegung der Vierergruppe an Zahlen p, q, r und s, die einem gegebenen Maskenelement (M) zugeordnet wird,
- den Schritt zur Festlegung der Nummer des Symbols (S), das zu verschlüsseln oder entschlüsseln ist, wobei diese Nummer nachfolgend mit m bezeichnet wird,
- den Schritt der Berechnung der Formel m.r + s,
- den Schritt, wenn das Ergebnis der im vorherigen Schritt ausgeführten Berechnung gleich Null oder ein Vielfaches von N ist, der Berechnung einer Zahl k, so dass die Formel k.r - p ein Vielfaches von N ist,
- den Schritt, wenn das Ergebnis der im vorherigen Schritt ausgeführten Berechnung weder Null, noch ein Vielfaches von N ist, der Berechnung einer positiven Zahl k, so dass die Formel k. (m.r + s) - (m.p + q) ein Vielfaches von N ist,
- den Schritt der Berechnung des Rests der Division durch N der im vorherigen Schritt berechneten Zahl k,
- den Schritt der Festlegung des Symbols des Maskenalphabets, dessen Nummer die im vorherigen Schritt berechnete Zahl ist, wobei dieses Symbol somit das Ergebnis (R) ist, das man errechnen wollte,
sodass die so definierte Permutation einer Berechnung einer homografischen Funktion in modularer Arithmetik der Symbolnummern entspricht, und dass das im vorherigen Schritt bestimmte Symbol somit das Ergebnis dieser Permutation ist, die auf das gegebene Symbol angewandt wird.

10. Verfahren nach irgendeinem der Ansprüche 1 bis 9; das besagte Verfahren wendet dabei einen ersten Pseudo-Zufallsgenerator (GA1) an, der mithilfe des besagten Initialisierungsschlüssels (Cl) initialisiert werden kann;
Die vom besagten ersten Pseudo-Zufallsgenerator gelieferten Werte werden dabei als Eingabedaten für einen Hackalgorithmus verwendet, dessen Ergebnisse verwendet werden, um die besagte Zufallssequenz (SA) zu liefern ;
der besagte Pseudo-Zufallsgenerator (GA) sorgt dabei für die Zusammenstellung des besagten ersten Pseudo-Zufallsgenerators (GA1) und des besagten Hackalgorithmus.

11. Verfahren nach irgendeinem der Ansprüche 1 bis 9; das besagte Verfahren enthält darüber hinaus den vorbereitenden Schritt der Aufstellung einer Zahlenreihe, die nachfolgend Sekundärverschlüsselungscode (CS) genannt wird, basierend auf dem gesamten oder einem Teil des besagten Primärverschlüsselungscodes (CP);
das besagte Verfahren wendet dabei einen ersten Pseudo-Zufallsgenerator (GA1) an, der mithilfe des besagten Initialisierungsschlüssels (Cl) initialisiert werden kann, wobei die vom besagten ersten Pseudo-Zufallsgenerator (GA1) gelieferten Werte mithilfe eines ersten Verschlüsselungsalgorithmus verschlüsselt werden, der als Verschlüsselungscode den besagten Sekundärverschlüsselungscode (CS) verwendet, wobei die Ergebnisse des besagten ersten Verschlüsselungsalgorithmus verwendet werden, um die besagte Zufallssequenz (SA) zu liefern;
der besagte Pseudo-Zufallsgenerator (GA) sorgt dabei für die Zusammenstellung des besagten ersten Pseudo-Zufallsgenerators (GA1) und des besagten ersten Verschlüsselungsalgorithmus.

12. System zum Verschlüsseln und Entschlüsseln einer Information (1); die besagte Information (I) ist dabei durch eine Reihe von Symbolen (S) dargestellt; die besagten Symbole (S) sind dabei einer Einheit an Symbolen entnommen, die nachfolgend das Alphabet genannt wird; das besagte Alphabet wird dabei in zwei getrennte Abschnitte unterteilt, wobei einer der beiden Abschnitte nachfolgend das Kontrollalphabet genannt wird und aus Symbolen besteht, die bei der Verschlüsselung nicht verändert werden, und der andere der beiden besagten Abschnitte nachfolgend Meldungsalphabet genannt wird und aus Symbolen besteht, die bei der Verschlüsselung eventuell verändert werden;
das besagte System ist dabei so ausgelegt, dass jedem Symbol des besagten Meldungsalphabets bereits vorab eine Zahl zwischen 0 und N-1 zugeordnet wird, wobei N die Elementzahl des Meldungsalphabets darstellt, wobei die Zahl, die zuvor dem besagten Symbol zugeordnet wurde, nachfolgend die Nummer des besagten Symbols genannt wird, sodass es für jede Zahl zwischen 0 und N-1 nur ein einziges Symbol aus dem Meldungsalphabet gibt, dem die Zahl als Nummer zugeordnet wird;
das besagte System ist in besonderem Maße dazu bestimmt, die Kommunikation zwischen einem Computer, der nachfolgend Kundencomputer genannt wird, und einem Netzwerk bestehend aus einem oder mehreren Computern zu sichern, wobei das System zwischen dem besagten Kundencomputer und dem besagten Netzwerk eingeschaltet wird,
sodass die gesamte Information, die zwischen dem besagten Kundencomputer und dem besagten Netzwerk zirkuliert, und verschlüsselt oder entschlüsselt werden muss, dieses System durchläuft;
das besagte System enthält dabei einen Pseudo-Zufallsgenerator (GA), der eine Folge von Werten liefert, die nachfolgend Zufallssequenz (SA) genannt wird, wobei die Werte, die die besagte Zufallssequenz (SA) bilden, in einer Einheit enthalten sind, die nachfolgend Raum der Zufallswerte genannt wird;
die Werte des besagten Raumes der Zufallswerte sind dabei Zahlen, wobei einige dieser Werte in einer Untereinheit des besagten Raumes der Zufallswerte enthalten sind, die nachfolgend Maskenalphabet genannt wird;
der besagte Pseudo-Zufallsgenerator (GA) kann dabei vor seiner Verwendung und vor der Lieferung der besagten Folge von Werten anhand einer Zahlenreihe initialisiert werden, die nachfolgend Initialisierungsschlüssel (CI) genannt wird; der besagte Initialisierungsschlüssel (CI) bestimmt dabei die Zufallssequenz (SA), die vom Generator geliefert wird;
das besagte System enthält darüber hinaus:
- zwei Eingangs- und Ausgangseinheiten (UES), von denen eine der beiden dazu bestimmt ist, die Kommunikation zwischen dem besagten System und dem besagten Kundencomputer abzuwickeln, und die andere dazu bestimmt ist, die Kommunikation zwischen dem besagten System und dem besagten Netzwerk abzuwickeln;
- erste Behandlungssysteme (TR1), mit denen man eine Zahlenreihe berücksichtigen kann, die nachfolgend Primärverschlüsselungscode (CP) genannt wird, und mit denen basierend auf allen oder auf einem Teil des besagten Primärverschlüsselungscodes (CP) der besagte erste Initialisierungsschlüssel (Cl) aufgebaut werden kann,
- zweite Behandlungssysteme (TR2), mit denen entschieden werden kann, ob ein zum besagten Raum der Zufallswerte gehörender Wert dem besagten Maskenalphabet angehört,
- dritte Behandlungssysteme (TR3), mit denen die nacheinander vom besagten Pseudo-Zufallsgenerator gelieferten Werte gelesen werden können, bis man ein Element (M) erhält, das zum besagten Maskenalphabet gehört,
- vierte Behandlungssysteme (TR4), mit denen entschieden werden kann, welche der Symbole (S), die das besagte System durchlaufen, verschlüsselt oder entschlüsselt werden müssen, und welche Symbole ohne Änderung zu übertragen sind,
- fünfte Behandlungssysteme (TR5), mit denen einem Symbol des besagten Meldungsalphabets eine Zahl zugeordnet werden kann, und mit denen darüber hinaus einerseits, ausgehend von einem gegebenen Element des Maskenalphabets, das nachfolgend Maskenelement (M) genannt wird, eine Permutation aus dem Meldungsalphabet ausgewählt werden kann, wobei diese Permutation nachfolgend die dem Maskenelement (M) zugeordnete Permutation genannt wird, und mit denen andererseits die dem Maskenelement (M) zugeordnete und ausgewählte Permutation und ein gegebenes Element des Meldungsalphabets (S), das von einer der beiden besagten Eingangs- und Ausgangseinheiten geliefert wird, ein Ergebnis (R) dieser Permutation bestimmen können, die auf das besagte gegebene und gelieferte Element (S) angewandt wird, und das so bestimmte Ergebnis (R) zur anderen der beiden Eingangs- und Ausgangseinheiten senden können.

13. System nach Anspruch 12; die besagten fünften Behandlungssysteme (TR5) ermöglichen darüber hinaus die Auswahl der umgekehrten Permutation der besagten und einem Element (M) des Maskenalphabets zugeordneten Permutation.

14. System nach Anspruch 12 oder 13; die besagten fünften Behandlungssysteme (TR5) ermöglichen darüber hinaus die Durchführung einer modularen Addition zwischen der besagten Zahl, die dem Symbol des besagten Meldungsalphabets zugeordnet ist, und einem Element (M) des besagten Maskenalphabets, und die Zuordnung eines Elements (R) des Meldungsalphabets zum Ergebnis dieser Addition.

15. System nach Anspruch 12 oder 13; die besagten fünften Behandlungssysteme (TR5) ermöglichen darüber hinaus Durchführung einer modularen Subtraktion zwischen der besagten Zahl, die dem Symbol des besagten Meldungsalphabets zugeordnet ist, und einem Element (M) des besagten Maskenalphabets, und die Zuordnung eines Elements (R) des Meldungsalphabets zum Ergebnis dieser Subtraktion.

16. System nach Anspruch 12 oder 13; die besagten fünften Behandlungssysteme (TR5) ermöglichen darüber hinaus Durchführung einer modularen Multiplikation zwischen der besagten Zahl, die dem Symbol des besagten Meldungsalphabets zugeordnet ist, und einem Element (M) des besagten Maskenalphabets, und die Zuordnung eines Elements (R) des Meldungsalphabets zum Ergebnis dieser Multiplikation.

17. System nach Anspruch 12 oder 13; die besagten fünften Behandlungssysteme (TR5) ermöglichen darüber hinaus Durchführung einer modularen Division zwischen der besagten Zahl, die dem Symbol des besagten Meldungsalphabets zugeordnet ist, und einem Element (M) des besagten Maskenalphabets, und die Zuordnung eines Elements (R) des Meldungsalphabets zum Ergebnis dieser Division.

18. System nach Anspruch 12 oder 13; die besagten fünften Behandlungssysteme (TR5) ermöglichen darüber hinaus Durchführung einer modularen Exponentiation zwischen der besagten Zahl, die dem Symbol des besagten Meldungsalphabets zugeordnet ist, und einem Element (M) des besagten Maskenalphabets, und die Zuordnung eines Elements (R) des Meldungsalphabets zum Ergebnis dieser Exponentiation.

19. System nach Anspruch 12 oder 13; die besagten fünften Behandlungssysteme (TR5) ermöglichen darüber hinaus Durchführung einer modularen Wurzelziehung und die Zuordnung eines Elements (R) des Meldungsalphabets zum Ergebnis dieser Wurzelziehung.

20. System nach Anspruch 12 oder 13; die Anzahl der Symbole, die das besagte Meldungsalphabet bilden wird nachfolgend N genannt, wobei das System darüber hinaus sechste Behandlungssysteme (TR6) enthält, mit denen einem Element (M) des besagten Maskenalphabets eine Vierergruppe an Zahlen p, q, r und s zugeordnet werden kann, wobei die fünften Behandlungssysteme (TR5) es darüber hinaus ermöglichen:
- einem Symbol des besagten Meldungsalphabets eine Zahl zwischen 0 und N-1 zuzuordnen, wobei diese Zahl nachfolgend mit m bezeichnet wird,
- die Formel m.r + s zu berechnen,
- festzulegen, ob ein Ausdruck Null oder ein Vielfaches von N ist,
- eine Zahl k zwischen 0 und N-1 zu berechnen, sodass die Formel k.r-p ein Vielfaches von N ist,
- eine Zahl k zwischen 0 und N-1 zu berechnen, sodass die Formel k.(m.r + s) - (m.p + q) ein Vielfaches von N ist,
- einer so berechneten Zahl k ein Element (R) des Meldungsalphabets zuzuordnen.

21. System nach irgendeinem der Ansprüche 12 bis 20; das besagte System enthält dabei einen ersten Pseudo-Zufallsgenerator (GA1), der mithilfe des besagten Initialisierungsschlüssels (Cl) und mit Berechnungssystemen (H) initialisiert werden kann, wodurch auf die vom ersten Pseudo-Zufallsgenerator (GA1) gelieferten Werte ein Hackalgorithmus angewandt werden kann, und die Ergebnisse des besagten Hackalgorithmus den besagten zweiten und dritten Behandlungssystemen (TR2, TR3) übertragen werden, wobei der besagte Pseudo-Zufallsgenerator (GA) in der Verbindung des besagten ersten Pseudo-Zufallsgenerators (GA1) und der besagten Berechnungssysteme (H) besteht, wodurch ein Hackalgorithmus auf die vom ersten Pseudo-Zufallsgenerator (GA1) gelieferten Werte angewandt werden kann.

22. System nach irgendeinem der Ansprüche 12 bis 20; das besagte System enthält dabei einen ersten Pseudo-Zufallsgenerator (GA1), der mithilfe des besagten Initialisierungsschlüssels (CI) initialisiert werden kann; das besagte System enthält darüber hinaus siebte Behandlungssysteme (TR7), mit denen, ausgehend vom gesamten oder von einem Teil des besagten Primärverschlüsselungscodes (CP) eine Zahlenreihe aufgebaut werden kann, die nachfolgend Sekundärverschlüsselungscode (CS) genannt wird; das besagte Verfahren enthält darüber hinaus Berechnungssysteme (K) zur Anwendung eines Verschlüsselungsalgorithmus, der als Verschlüsselungscode den besagten Sekundärverschlüsselungscode (CS) verwendet, wobei der besagte Verschlüsselungsalgorithmus auf die Werte angewandt wird, die vom besagten ersten Pseudo-Zufallsgenerator (GA1) geliefert werden; die Ergebnisse des besagten Verschlüsselungsalgorithmus werden den besagten zweiten und dritten Behandlungssystemen (TR2, TR3) übermittelt, wobei der besagte Pseudo-Zufallsgenerator (GA) in der Verbindung des besagten ersten Pseudo-Zufallsgenerators (GA1) und der besagten Berechnungssysteme (K) besteht, wodurch ein Verschlüsselungsalgorithmus auf die vom ersten Pseudo-Zufallsgenerator (GA1) gelieferten Werte angewandt werden kann.
